# EUROPEAN PATENT APPLICATION

(11) **EP 1 498 189 A1**
(43) Date of publication of application: **19.01.2005**
(21) Application number: 03405548.3
(22) Date of filing: 18.07.2003
(51) Int. Cl.: B05D 3/14, B05D 3/08, B05D 3/06, B05D 5/04, C08F 2/50, C09D 133/00

(54) **Anti-fog coatings on thermoplastic substrates**

(71) Applicant: Ciba Specialty Chemicals Holding Inc., 4057 Basel (CH); Ciba Specialty Chemicals S.p.A., 40037 Sasso Marconi (BO) (IT)
(72) Inventor: Sala, Massimiliano, 41100 Modena (IT); Telesca, Rosanna, 40037 Sasso Marconi (BO) (IT); Bassi, Anna, 40131 Bologna (IT)

(57) **Abstract**

The invention relates to a process for the production of strongly adhering anti-fogging coatings on thermoplastic substrates, wherein a low-temperature plasma treatment, a corona discharge treatment or a flame treatment is applied to the thermoplastic substrate. Subsequently the substrate is coated at normal pressure with a composition comprising one or more photoinitiators and at least one ethylenically unsaturated monomer or oligomer with one or more hydrophilic groups in the molecule, imparting anti-fogging properties. The coating is then cured by means of radiation. The invention relates also to the use of an unsaturated monomer or oligomer with one or more hydrophilic groups in the molecule as anti-fogging agent in such layers and to the strongly adherent coatings themselves.

## Description

The invention relates to a process for the production of strongly adhering anti-fogging coatings on thermoplastic substrates, wherein a low-temperature plasma treatment, a corona discharge treatment or a flame treatment is applied to the thermoplastic substrate. Subsequently the substrate is coated at normal pressure with a composition comprising one or more photoinitiators and at least one ethylenically unsaturated monomer or oligomer with one or more hydrophilic groups in the molecule, imparting anti-fogging properties. The coating is then cured by means of radiation. The invention relates also to the use of an unsaturated monomer or oligomer with one or more hydrophilic groups in the molecule as anti-fogging agent in such layers and to the strongly adherent coatings themselves.

Of the various properties required for example in food packaging films, transparency, anti-fogging properties and compliance to the legislation for food contact are particularly important. When humid food is packed at room temperature and then cooled down in a refrigerator at around 4°C, the air enclosed in the package is no longer able to hold its water in the vapour phase. The air in the package becomes saturated and the water condenses as water droplets on the film's surface.

To overcome this problem, polymer films are modified with anti-fogging additives. The modified plastic films do not prevent the formation of condensation per se. However, while water vapour condenses on such films, anti-fogging additives migrate to the surface of the film, causing the condensate to spread evenly over the film's surface and run off, instead of forming droplets, cf. Plastics Additives Handbook, 5th Edition 2001, Hans Zweifel Ed., Hanser (Hanser Publisher Munich, Hanser Gardner Publications, Inc. Cincinnati ISBN 3-446-21654-5, pages 609 - 626).
Representative anti-fogging additives are glycerol monooleate, polyglycerol esters, sorbitan esters, ethoxylated sorbitan esters, nonylphenol ethoxylate or ethoxylated alcohols.
Conventionally anti-fogging additives are incorporated in the polymer matrix as pure additives or as masterbatches or concentrates. Typical anti-fogging additive concentrations range between 1 and 5 % by weight, based on the weight of the substrate. The additives have the property of migrating to the surface of the film.

In a monolayer film, the anti-fogging additive migrates in both directions, towards the inside of the food packaging film where the anti-fogging effect is desirable, but also to the outside of the film where it is unnecessary. On the inside of the polymer film, the anti-fogging additive is lost as it is washed off by moisture and as a result, it is impossible to obtain a permanent anti-fogging effect.
Anti-fogging additives can also be applied to the surface by coating. However, when surfactant molecules are applied as a coating, they have the undesirable property of forming only a weak adhesion to polymeric films or foils, particularly to polyethylene films and therefore they are easily removed by heat and humidity, which may cause for example food contamination. Consequently there is still a need, particularly in the packaging industry, for thermoplastic films having long lasting anti-fogging properties not contaminating the packaged food.

One way to obtain "permanent" additives is to covalently bond them to the polymeric matrix through a chemical reaction. Amongst a variety of possible reactions, one option is to use photoreactive groups in the molecule so that, by exposition to visible and/or ultraviolet light, either from an artificial source or from solar irradiation, the molecule reacts with the polymeric substrate. As a consequence, the additive is grafted onto the polymer surface and its effect remains permanent. Several examples of photo-reactive additives are reported in the art, such as for example in EP 0897 916 A2 and WO02072530.

It has now been found that anti-fogging coatings having especially good adhesion can be obtained by applying a photoinitiator and one or more ethylenically unsaturated anti-fogging compounds having one or more hydrophilic groups in the molecule, optionally with further ethylenically unsatured compounds different from the anti-fog compound to a substrate, after that substrate has been subjected to a plasma treatment (low pressure and/or normal pressure plasmas), corona treatment or flame treatment. The substrate so treated is finally exposed to electromagnetic radiation. This results in a coated substrate with long-term anti-fogging properties, because the additive is permanently bonded to the polymer substrate and cannot be physically removed.

If the substrate is a film for food packaging, contamination of the food does also not occur, since the anti-fog additive remains bonded to the polymer film and cannot be washed off.

One aspect of the invention is a process for the production of a strongly adherent anti-fogging coating on a thermoplastic substrate, comprising the steps
a) applying a low temperature plasma treatment; a corona discharge treatment or a flame treatment to a thermoplastic substrate,
b) coating the treated side of the thermoplastic substrate under atmospheric pressure with one or more photoinitiators or mixtures of photoinitiators together with a monomer or/and oligomer, containing at least one ethylenically unsaturated group and one or more hydrophilic groups in the molecule, thereby imparting anti-fogging properties to the molecule, and
c) exposing the coated thermoplastic substrate to UVNIS radiation or an electron beam.

Examples for thermoplastic polymer substrates are given below.
1. Polymers of monoolefins and diolefins, for example polypropylene, polyisobutylene, polybut-1-ene, poly-4-methylpent-1-ene, polyvinylcyclohexane, polyisoprene or polybutadiene, as well as polymers of cycloolefins, for instance of cyclopentene or norbornene, polyethylene (which optionally can be crosslinked), for example high density polyethylene (HDPE), high density and high molecular weight polyethylene (HDPE-HMW), high density and ultrahigh molecular weight polyethylene (HDPE-UHMW), medium density polyethylene (MDPE), low density polyethylene (LDPE), linear low density polyethylene (LLDPE), (VLDPE) and (ULDPE).
   Polyolefins, i.e. the polymers of monoolefins exemplified in the preceding paragraph, preferably polyethylene and polypropylene, can be prepared by different, and especially by the following, methods:
   a) radical polymerisation (normally under high pressure and at elevated temperature).
   b) catalytic polymerisation using a catalyst that normally contains one or more than one metal of groups IVb, Vb, Vlb or VIII of the Periodic Table. These metals usually have one or more than one ligand, typically oxides, halides, alcoholates, esters, ethers, amines, alkyls, alkenyls and/or aryls that may be either π- or σ-coordinated. These metal complexes may be in the free form or fixed on substrates, typically on activated magnesium chloride, titanium (III) chloride, alumina or silicon oxide. These catalysts may be soluble or insoluble in the polymerisation medium. The catalysts can be used by themselves in the polymerisation or further activators may be used, typically metal alkyls, metal hydrides, metal alkyl halides, metal alkyl oxides or metal alkyloxanes, said metals being elements of groups Ia, IIa and/or IIIa of the Periodic Table. The activators may be modified conveniently with further ester, ether, amine or silyl ether groups. These catalyst systems are usually termed Phillips, Standard Oil Indiana, Ziegler (-Natta), TNZ (DuPont), metallocene or single site catalysts (SSC).
2. Mixtures of the polymers mentioned under 1), for example mixtures of polypropylene with polyisobutylene, polypropylene with polyethylene (for example PP/HDPE, PP/LDPE) and mixtures of different types of polyethylene (for example LOPE/HOPE).
3. Copolymers of monoolefins and diolefins with each other or with other vinyl monomers, for example ethylene/propylene copolymers, linear low density polyethylene (LLDPE) and mixtures thereof with low density polyethylene (LDPE), propylene/but-1-ene copolymers, propylene/isobutylene copolymers, ethylene/but-1-ene copolymers, ethylene/hexene copolymers, ethylene/methylpentene copolymers, ethylene/heptene copolymers, ethylene/octene copolymers, ethylene/vinylcyclohexane copolymers, ethylene/cycloolefin copolymers (e.g. ethylene/norbornene like COC), ethylene/1-olefins copolymers, where the 1-olefin is generated in-situ; propylene/butadiene copolymers, isobutylene/isoprene copolymers, ethylene/vinylcyclohexene copolymers, ethylene/alkyl acrylate copolymers, ethylene/alkyl methacrylate copolymers, ethylene/vinyl acetate copolymers or ethylene/acrylic acid copolymers and their salts (ionomers) as well as terpolymers of ethylene with propylene and a diene such as hexadiene, dicyclopentadiene or ethylidene-norbornene; and mixtures of such copolymers with one another and with polymers mentioned in 1) above, for example polypropylene/ethylene-propylene copolymers, LDPE/ethylene-vinyl acetate copolymers (EVA), LDPE/ethylene-acrylic acid copolymers (EAA), LLDPE/EVA, LLDPE/EAA and alternating or random polyal-kylene/carbon monoxide copolymers and mixtures thereof with other polymers, for example polyamides.
4. Hydrocarbon resins (for example C₅-C₉) including hydrogenated modifications thereof (e.g. tackifiers) and mixtures of polyalkylenes and starch.
   Homopolymers and copolymers from 1.) - 4.) may have any stereostructure including syndiotactic, isotactic, hemi-isotactic or atactic; where atactic polymers are preferred. Stereoblock polymers are also included.
5. Polystyrene, poly(p-methylstyrene), poly(α-methylstyrene).
6. Aromatic homopolymers and copolymers derived from vinyl aromatic monomers including styrene, α-methylstyrene, all isomers of vinyl toluene, especially p-vinyltoluene, all isomers of ethyl styrene, propyl styrene, vinyl biphenyl, vinyl naphthalene, and vinyl anthracene, and mixtures thereof. Homopolymers and copolymers may have any stereostructure including syndiotactic, isotactic, hemi-isotactic or atactic; where atactic polymers are preferred. Stereoblock polymers are also included.
   6a. Copolymers including aforementioned vinyl aromatic monomers and comonomers selected from ethylene, propylene, dienes, nitriles, acids, maleic anhydrides, maleimides, vinyl acetate and vinyl chloride or acrylic derivatives and mixtures thereof, for example styrene/butadiene, styrene/acrylonitrile, styrene/ethylene (interpolymers), styrene/alkyl methacrylate, styrene/butadiene/alkyl acrylate, styrene/butadiene/alkyl methacrylate, styrene/maleic anhydride, styrene/acrylonitrile/methyl acrylate; mixtures of high impact strength of styrene copolymers and another polymer, for example a polyacrylate, a diene polymer or an ethylene/propylene/diene terpolymer; and block copolymers of styrene such as styrene/butadiene/styrene, styrene/isoprene/styrene, styrene/ethylene/butylene/styrene or styrene/ethylene/propylene/styrene.
   6b. Hydrogenated aromatic polymers derived from hydrogenation of polymers mentioned under 6.), especially including polycyclohexylethylene (PCHE) prepared by hydrogenating atactic polystyrene, often referred to as polyvinylcyclohexane (PVCH).
   6c. Hydrogenated aromatic polymers derived from hydrogenation of polymers mentioned under 6a.).

   Homopolymers and copolymers may have any stereostructure including syndiotactic, isotactic, hemi-isotactic or atactic; where atactic polymers are preferred. Stereoblock polymers are also included.
7. Graft copolymers of vinyl aromatic monomers such as styrene or α-methylstyrene, for example styrene on polybutadiene, styrene on polybutadiene-styrene or polybutadiene-acrylonitrile copolymers; styrene and acrylonitrile (or methacrylonitrile) on polybutadiene; styrene, acrylonitrile and methyl methacrylate on polybutadiene; styrene and maleic anhydride on polybutadiene; styrene, acrylonitrile and maleic anhydride or maleimide on polybutadiene; styrene and maleimide on polybutadiene; styrene and alkyl acrylates or methacrylates on polybutadiene; styrene and acrylonitrile on ethylene/propylene/diene terpolymers; styrene and acrylonitrile on polyalkyl acrylates or polyalkyl methacrylates, styrene and acrylonitrile on acrylate/butadiene copolymers, as well as mixtures thereof with the copolymers listed under 6), for example the copolymer mixtures known as ABS, MBS, ASA or AES polymers.
8. Halogen-containing polymers such as polychloroprene, chlorinated rubbers, chlorinated and brominated copolymer of isobutylene-isoprene (halobutyl rubber), chlorinated or sulfochlorinated polyethylene, copolymers of ethylene and chlorinated ethylene, epichlorohydrin homo- and copolymers, especially polymers of halogen-containing vinyl compounds, for example polyvinyl chloride, polyvinylidene chloride, polyvinyl fluoride, polyvinylidene fluoride, as well as copolymers thereof such as vinyl chloride/vinylidene chloride, vinyl chloride/vinyl acetate or vinylidene chloride/vinyl acetate copolymers.
9. Polymers derived from α,β-unsaturated acids and derivatives thereof such as polyacrylates and polymethacrylates; polymethyl methacrylates, polyacrylamides and polyacrylonitriles, impact-modified with butyl acrylate.
10. Copolymers of the monomers mentioned under 9) with each other or with other unsaturated monomers, for example acrylonitrile/ butadiene copolymers, acrylonitrile/alkyl acrylate copolymers, acrylonitrile/alkoxyalkyl acrylate or acrylonitrile/vinyl- halide copolymers or acrylonitrile/ alkyl methacrylate/butadiene terpolymers.
11. Polymers derived from unsaturated alcohols and amines or the acyl derivatives or acetats thereof, for example polyvinyl alcohol, polyvinyl acetate, polyvinyl stearate, polyvinyl benzoate, polyvinyl maleate, polyvinyl butyral, polyallyl phthalate or polyallyl melamine; as well as their copolymers with olefins mentioned in 1) above.
12. Homopolymers and copolymers of cyclic ethers such as polyalkylene glycols, polyethylene oxide, polypropylene oxide or copolymers thereof with bisglycidyl ethers.
13. Polyacetals such as polyoxymethylene and those polyoxymethylenes which contain ethylene oxide as a comonomer; polyacetals modified with thermoplastic polyurethanes, acrylates or MBS.
14. Polyphenylene oxides and sulfides, and mixtures of polyphenylene oxides with styrene polymers or polyamides.
15. Polyurethanes derived from hydroxyl-terminated polyethers, polyesters or polybutadienes on the one hand and aliphatic or aromatic polyisocyanates on the other, as well as precursors thereof.
16. Polyamides and copolyamides derived from diamines and dicarboxylic acids and/or from aminocarboxylic acids or the corresponding lactams, for example polyamide 4, polyamide 6, polyamide 6/6, 6/10, 6/9, 6/12, 4/6, 12/12, polyamide 11, polyamide 12, aromatic polyamides starting from m-xylene diamine and adipic acid; polyamides prepared from hexamethylenediamine and isophthalic or/and terephthalic acid and with or without an elastomer as modifier, for example poly-2,4,4,-trimethylhexamethylene terephthalamide or poly-m-phenylene isophthalamide; and also block copolymers of the aforementioned polyamides with polyolefins, olefin copolymers, ionomers or chemically bonded or grafted elastomers; or with polyethers, e.g. with polyethylene glycol, polypropylene glycol or polytetramethylene glycol; as well as polyamides or copolyamides modified with EPDM or ABS; and polyamides condensed during processing (RIM polyamide systems).
17. Polyureas, polyimides, polyamide-imides, polyetherimids, polyesterimids, polyhydantoins and polybenzimidazoles.
18. Polyesters derived from dicarboxylic acids and diols and/or from hydroxycarboxylic acids or the corresponding lactones, for example polyethylene terephthalate, polybutylene terephthalate, poly-1,4-dimethylolcyclohexane terephthalate, polyalkylene naphthalate (PAN) and polyhydroxybenzoates, as well as block copolyether esters derived from hydroxyl-terminated polyethers; and also polyesters modified with polycarbonates or MBS.
19. Polycarbonates and polyester carbonates.
20. Polyketones.
21. Polysulfones, polyether sulfones and polyether ketones.

Preferred is a process wherein the thermoplastic substrate is a polyolefin. Examples for polyolefins are given above. For instance the polyolefin is polyethylene or polypropylene.

The thermoplastic polymer substrate can be of various forms and/or processed to give various products, for example as (to give) films, foils, sheets, fibres, tapes, mouldings or profiles. Preferred are films, fibres and sheets. The substrate may be, for example, a material for use in the field of nutrition, e.g. as packaging for foodstuffs; cosmetics, medicaments, etc..

When films are used, they have typically a thickness of from 5 to 400 µ, in particular 10 to 100 µ.

The films can be monolayer films or multilayer films. If multilayer films are used, the above mentioned thickness applies to the whole multilayer film. Multilayer films may for example be prepared by coextrusion techniques, for example of up to 5 layers.

Possible ways of obtaining plasmas under vacuum conditions have been described frequently in the literature. The electrical energy can be coupled in by inductive or capacitive means. It may be direct current or alternating current; the frequency of the alternating current may range from a few kHz up into the MHz range. A power supply in the microwave range (GHz) is also possible.
The principles of plasma production and maintenance are described, for example, in A. T. Bell, "Fundamentals of Plasma Chemistry" in "Technology and Application of Plasma Chemistry", edited by J. R. Holahan and A. T. Bell, Wiley, New York (1974) and H. Suhr, Plasma Chem. Plasma Process 3(1),1, (1983).

As primary plasma gases it is possible to use, for example, He, argon, xenon, N₂, O₂, H₂, steam or air.
The process according to the invention is not sensitive *per se* in respect of the coupling-in of the electrical energy.

The process can be carried out batchwise, for example in a rotating drum, or continuously in the case of films, fibres or woven fabrics. Such methods are known and are described in the prior art. The plasma treatment of the thermoplastic substrate preferably takes place from 1 ms to 300 s, especially from 10 ms to 200 s.

The process can also be carried out under corona discharge conditions. Corona discharges are produced under normal pressure conditions, the ionised gas used being most frequently air. In principle, however, other gases and mixtures are also possible, as described, for example, in COATING Vol. 2001, No. 12, 426, (2001). The advantage of air as ionisation gas in corona discharges is that the operation can be carried out in an apparatus open to the outside and, for example, a film can be drawn through continuously between the discharge electrodes. Such process arrangements are known and are described, for example, in J. Adhesion Sci. Technol. Vol 7, No. 10, 1105, (1993). Three-dimensional workpieces can be treated with a plasma jet, the contours being followed with the assistance of robots.

When a corona discharge is used, possible gases are: air, H₂, CO₂ He, Ar, Kr, Xe, N₂, O₂ or H₂O singly or in the form of a mixture.

The flame treatment of substrates is known to the person skilled in the art. Corresponding industrial apparatus, for example for the flame treatment of films, is commercially available. In such a treatment, a film is conveyed on a cooled cylindrical roller past the flame-treatment apparatus, which consists of a chain of burners arranged in parallel, usually along the entire length of the cylindrical roller. Details can be found in the brochures of the manufacturers of flame-treatment apparatus (e.g. esse CI, flame treaters, Italy). The parameters to be chosen are governed by the particular substrate to be treated. For example, the flame temperatures, the flame intensity, the dwell times, the distance between substrate and burner, the nature of the combustion gas, air pressure, humidity, are matched to the substrate in question. As flame gases it is possible to use, for example, methane, propane, butane or a mixture of 70 % butane and 30 % propane.

Preferred is a process wherein in step a) a corona discharge treatment is applied.

Process step b) is carried out under normal pressure and normal atmospheric conditions.
In process step b), the thermoplastic substrate is treated with one or more photoinitiators or mixtures of photoinitiators together with a monomer or/and oligomer, containing at least one ethylenically unsaturated group and one or more hydrophilic groups in the molecule, thereby imparting anti-fogging properties.

Photoinitiators suitable for use in the process according to the invention are in principle any compounds and mixtures that form one or more free radicals when irradiated with electromagnetic waves. These include initiator systems consisting of a plurality of initiators and systems that function independently of one another or synergistically. In addition to coinitiators, for example amines, thiols, borates, enolates, phosphines, carboxylates and imidazoles, it is also possible to use sensitisers, for example acridines, xanthenes, thiazenes, coumarins, thioxanthones, triazines and dyes. A description of such compounds and initiator systems can be found e.g. in Crivello J.V., Dietliker K.K., (1999): Chemistry & Technology of UV & EB Formulation for Coatings, Inks & Paints, and in Bradley G. (ed.) Vol. 3: Photoinitiators for Free Radical and Cationic Polymerisation 2nd Edition, John Wiley & Son Ltd. The photoinitiator suitable for the process according to the invention in step b) may be either an initiator having an unsaturated group or an initiator not having such a group
Such compounds and derivatives are derived, for example, from the following classes of compounds: benzoins, benzil ketals, acetophenones, hydroxyalkylphenones, aminoalkyl-phenones, acylphosphine oxides, acylphosphine sulfides, acyloxyiminoketones, alkylamino-substituted ketones, such as Michler's ketone, peroxy compounds, dinitrile compounds, halogenated acetophenones, phenylglyoxylates, dimeric phenylglyoxalates, benzophenones, oximes and oxime esters, thioxanthones, coumarins, ferrocenes, titanocenes, onium salts, sulfonium salts, iodonium salts, diazonium salts, borates, triazines, bisimidazoles, polysilanes and dyes. It is also possible to use combinations of the compounds from the mentioned classes of compounds with one another and combinations with corresponding coinitiator systems and/or sensitisers.

The photoinitiator is preferably a compound of formula X or Xa

(RG)-A-(IN) (X),

(IN)-A-(RG')-A-(IN) (Xa),

wherein
(IN) is a photoinitiator base structure;
A is a spacer group or a single bond;
(RG) is hydrogen or at least one functional ethylenically unsaturated group; and
(RG') is a single bond or a divalent radical that contains at least one functional ethylenically unsaturated group, or is a trivalent radical.

Of interest are compounds of formula X or Xa wherein
(IN) is a photoinitiator base structure of formula (XII) or (XIII) 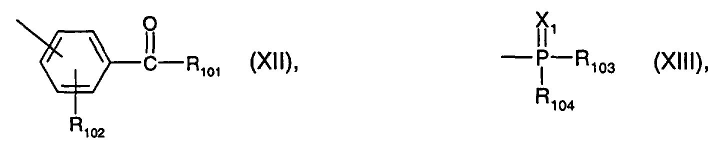
R₁₀₁ is a group (A), (B), (C) or (XIII) 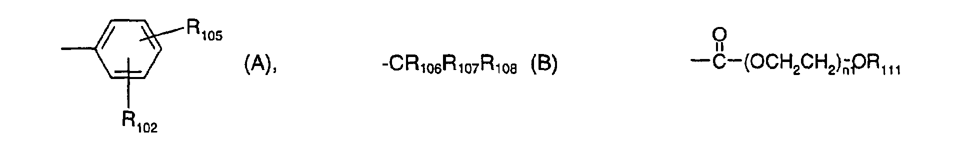
(C);
n₁ is a number from 0 to 6;
R₁₀₂ is hydrogen, C₁-C₁₂alkyl, halogen, the group (RG)-A- or, when R₁₀₁ is a group (A), two radicals R₁₀₂ in the ortho-position to the carbonyl group may also together be -S- or 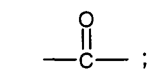
R₁₀₃ and R₁₀₄ are each independently of the other C₁-C₆alkyl, C₁-C₆alkanoyl, phenyl or benzoyl, the radicals phenyl and benzoyl each being unsubstituted or substituted by halogen, C₁-C₆alkyl, C₁-C₆alkylthio or by C₁-C₆alkoxy;
R₁₀₅ is hydrogen, halogen, C₁-C₁₂alkyl or C₁-C₁₂alkoxy or the group (RG)-A- ;
R₁₀₆ is OR₁₀₉ or N(R₁₀₉)₂ or is 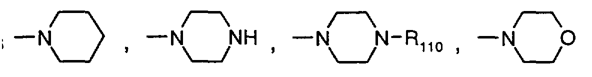 or SO₂R₁₀₉;
R₁₀₇ and R₁₀₈ are each independently of the other hydrogen, C₁-C₁₂alkyl, C₂-C₁₂alkenyl, C₁-C₁₂alkoxy, phenyl or benzyl or R₁₀₇ and R₁₀₈ together are C₂-C₆alkylene;
R₁₀₉ is hydrogen, C₁-C₆alkyl or C₁-C₆alkanoyl;
R₁₁₀ is hydrogen, C₁-C₁₂alkyl or phenyl;
R₁₁₁ is C₁-C₄alkyl or 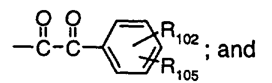
X₁ is oxygen or sulfur.
(IN) is, for example, a group

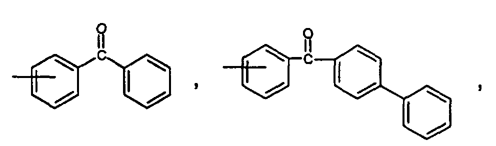

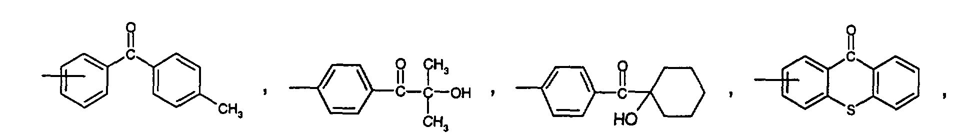

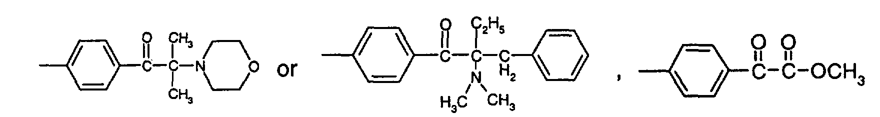

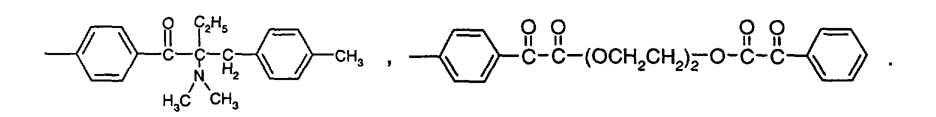

A in the compounds of formula X or Xa is, for example, a single bond, a spacer group - Z-[(A₁)ₐ-Y]_{c}-[(A₂)_{b}-X]_{d}-, 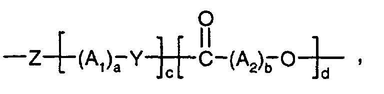 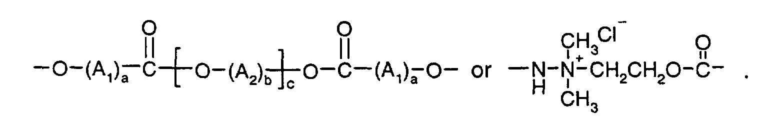 X, Y and Z are each independently of the others a single bond, -O-, -S-, -N(R₁₀)-, -(CO)-, - (CO)O-, -(CO)N(R₁₀)-, -O-(CO)-, -N(R₁₀)-(CO)- or -N(R₁₀)-(CO)O-.
A₁ and A₂ are e.g. each independently of the other C₁-C₄alkylene, C₃-C₁₂cycloalkylene, phenylene, phenylene-C₁-C₄alkylene or C₁-C₄alkylene-phenylene-C₁-C₄alkylene. a, b, c and d are each independently of the others a number from 0 to 4.

Special preference is given to compounds of formula X or Xa wherein A is a spacer group - Z-[(CH₂)ₐ-Y]_{c}-[(CH₂)_{b}-X]_{d}- and X, Y, Z, a, b, c and d are as defined above.

In the compounds of formula X or Xa
(RG) is hydrogen or R_{c}R_{b}C=CRₐ- especially R_{c}R_{b}C=CRₐ-; (RG') is a single bond, 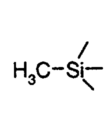 or 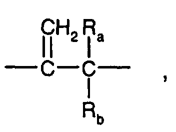 , especially 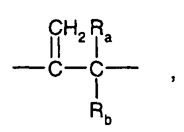 and Rₐ, R_{b}, R_{c} are each H or C₁-C₆alkyl, especially H or CH₃.

The preparation of such photoinitiator compounds is known to the person skilled in the art and has already been described in a large number of publications.

For example, compounds containing unsaturated groups can be prepared by reaction of 4-[2-hydroxyethoxy)-benzoyl]-1-hydroxy-1-methyl-ethane (Irgacure® 2959, Ciba Spezialitätenchemie) with isocyanates containing acryloyl or methacryloyl groups or with other compounds containing acryloyl or methacryloyl groups, see e.g. US 4 922 004.
Commercially available unsaturated photoinitiators are, for example, 4-(13-acryloyl-1,4,7,10,13-pentaoxatridecyl)-benzophenone (Uvecryl P36 from UCB), 4-benzoyl-N,N-dimethyl-N-[2-(1-oxo-2-propenyl)oxy]ethylphenylmethanaminium chloride (Quantacure ABQ from Great Lakes), and some copolymerisable unsaturated tertiary amines (Uvecryl P101, Uvecryl P104, Uvecryl P105, Uvecryl P115 from UCB Radcure Specialties) or copolymerisable aminoacrylates (Photomer 4116 and Photomer 4182 from Ackros; Laromer LR8812 from BASF; CN381 and CN386 from Cray Valley).
The publications indicated below provide further specific examples of suitable photoinitiator compounds having an ethylenically unsaturated function, and the preparation thereof:
Unsaturated aceto- and benzo-phenone derivatives are described, for example, in US 3 214 492, US 3 429 852, US 3 622 848 and US 4 304 895, for example 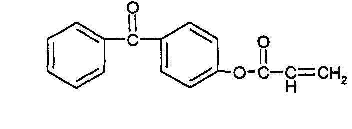 . Also suitable, for example, are 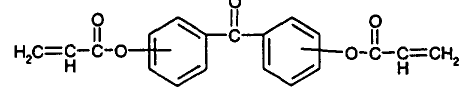 and further copolymerisable benzophenones, e.g. from UCB, Ebecryl P36 or in the form of Ebecryl P38 diluted in 30 % tripropylene glycol diacrylate.
Copolymerisable, ethylenically unsaturated acetophenone compounds can be found, for example, in US 4 922 004, for example 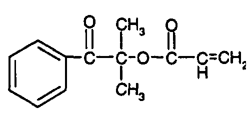 or 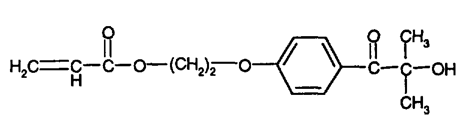 . 2-Acryloyl-thioxanthone has been published in Eur. Polym. J. 23, 985 (1987). Examples such as 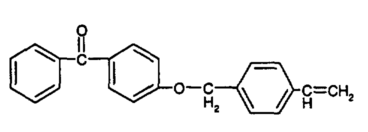 are described in DE 2 818 763. Further unsaturated carbonate-group-containing photoinitiator compounds can be found in EP 377 191. Uvecryl® P36 (already mentioned above), from UCB, is a benzophenone bonded to an acrylic function by ethylene oxide units (see Technical Bulletin 2480/885 (1985) from UCB or New. Polym. Mat. 1, 63 (1987)): 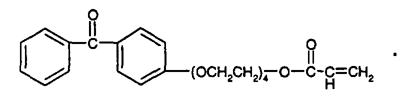 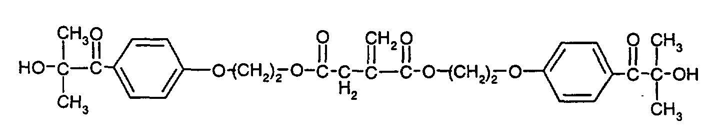 has been published in Chem. Abstr. 128: 283649r.

DE 195 01 025 gives further suitable ethylenically unsaturated photoinitiator compounds. Examples are 4-vinyloxycarbonyloxybenzophenone, 4-vinyloxycarbonyloxy-4'-chlorobenzophenone, 4-vinyloxycarbonyloxy-4'-methoxybenzophenone, N-vinyloxycarbonyl-4-amino-benzophenone, vinyloxycarbonyloxy-4'-fluorobenzophenone, 2-vinyloxycarbonyloxy-4'-methoxybenzophenone, 2-vinyloxycarbonyloxy-5-fluoro-4'-chlorobenzophenone, 4-vinyloxycarbonyloxyacetophenone, 2-vinyloxycarbonyloxyacetophenone, N-vinyloxycarbonyl-4-amino-acetophenone, 4-vinyloxycarbonyloxybenzil, 4-vinyloxycarbonyloxy-4'-methoxybenzil, vinyloxycarbonylbenzoin ether, 4-methoxybenzoinvinyloxycarbonyl ether, phenyl(2-vinyloxy-carbonyloxy-2-propyl)-ketone, (4-isopropylphenyl)-(2-vinyloxycarbonyloxy-2-propyl)-ketone, phenyl-(1-vinyloxycarbonyloxy)-cyclohexyl ketone, 2-vinyloxycarbonyloxy-9-fluorenone, 2-(N-vinyloxycarbonyl)-9-aminofluorenone, 2-vinylcarbonyloxymethylanthraquinone, 2-(N-vinyloxy-carbonyl)-aminoanthraquinone, 2-vinyloxycarbonyloxythioxanthone, 3-vinylcarbonyloxythio-xanthone or

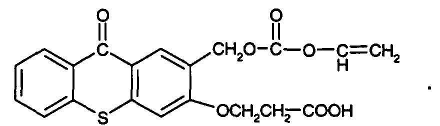

US 4 672 079 discloses *inter alia* the preparation of 2-hydroxy-2-methyl(4-vinylpropiophenone), 2-hydroxy-2-methyl-p-(1-methylvinyl)propiophenone, p-vinylbenzoylcyclohexanol, p-(1-methylvinyl)benzoyl-cyclohexanol.
Also suitable are the reaction products, described in JP Kokai Hei 2-292307, of 4-[2-hydroxy-ethoxy)-benzoyl]-1-hydroxy-1-methyl-ethane (Irgacure® 2959, Ciba Spezialitätenchemie) and isocyanates containing acryloyl or methacryloyl groups, for example 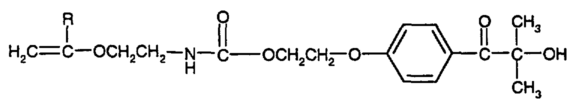 or 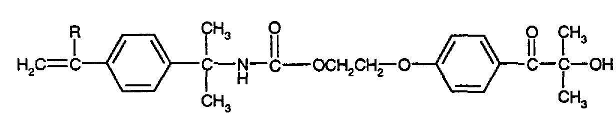 (wherein R= H or CH₃). Further examples of suitable photoinitiators are 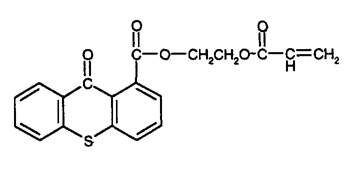 and

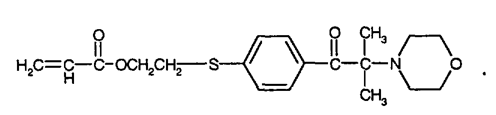

The following examples are described in Radcure '86, Conference Proceedings, 4-43 to 4-54 bv W. Bäumer *et al.* 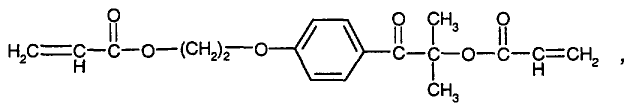 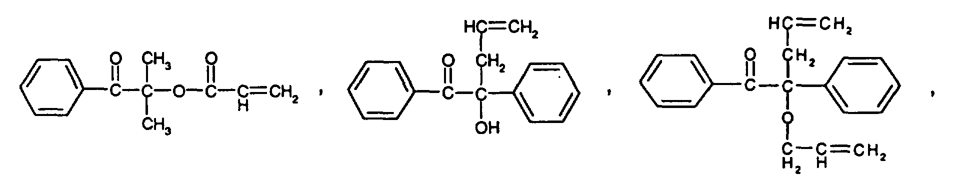 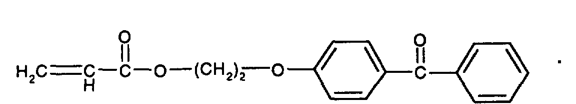 G. Wehner *et al.* report in Radtech '90 North America on 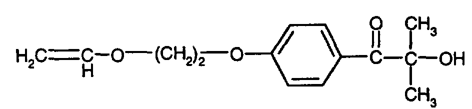 In the process according to the invention there are also suitable the compounds presented at RadTech 2002, North America 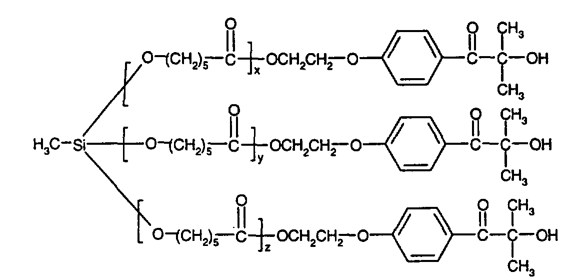 wherein x, y and z are an average of 3 (SiMFPI2) and

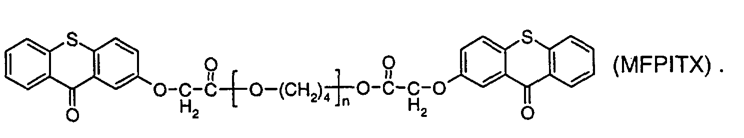

In the process according to the invention it is possible to use either saturated or unsaturated photoinitiators.
In the process according to the invention it is of course also possible to employ mixtures of different photoinitiators, for example mixtures of saturated and unsaturated photoinitiators.
Photoinitiators without an unsaturated group are known to the person skilled in the art and a large number and variety of such photoinitiators are commercially available. In the process there are in principle suitable any photoinitiators that, after plasma-, corona- or flame-treatment, adhere to the surface of the substrate so treated.

The meanings of the substituents defined in formulae X and Xa in the different radicals are explained below.

C₁-C₁₂Alkyl is linear or branched and is, for example, C₁-C₈-, C₁-C₆- or C₁-C₄-alkyl. Examples are methyl, ethyl, propyl, isopropyl, n-butyl, sec-butyl, isobutyl, tert-butyl, pentyl, hexyl, heptyl, 2,4,4-trimethyl-pentyl, 2-ethylhexyl, octyl, nonyl, decyl, undecyl and dodecyl, especially e.g. methyl or butyl.
C₁-C₆Alkyl and C₁-C₄alkyl are likewise linear or branched and have e.g. the above-mentioned meanings up to the appropriate number of carbon atoms. C₁-C₆Alkyl substituents for benzoyl or phenyl are especially C₁-C₄alkyl, e.g. methyl or butyl.

Halogen is fluorine, chlorine, bromine and iodine, especially chlorine and bromine, preferably chlorine.

When R₁ is a group (A), and two radicals R₂ in the ortho-position to the carbonyl group together also are -S- or -(C=O)-, there are obtained, for example, structures having a thioxanthone base structure 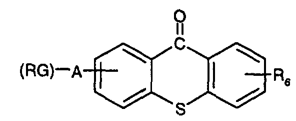 or anthraquinone base structure

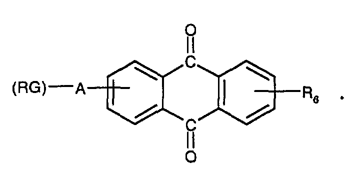

C₁-C₆Alkanoyl is linear or branched and is, for example, C₁-C₄alkanoyl. Examples are formyl, acetyl, propionyl, butanoyl, isobutanoyl, pentanoyl and hexanoyl, preferably acetyl. C₁-C₄Alkanoyl has the above-mentioned meanings up to the appropriate number of carbon atoms.

C₁-C₁₂AIkoxy denotes linear or branched radicals and is, for example, C₁-C₈-, C₁-C₆- or C₁-C₄-alkoxy. Examples are methoxy, ethoxy, propoxy, isopropoxy, n-butyloxy, sec-butyloxy, isobutyloxy, tert-butyloxy, pentyloxy, hexyloxy, heptyloxy, 2,4,4-trimethylpentyloxy, 2-ethyl-hexyloxy, octyloxy, nonyloxy, decyloxy and dodecyloxy, especially methoxy, ethoxy, propoxy, isopropoxy, n-butyloxy, sec-butyloxy, isobutyloxy, tert-butyloxy, preferably methoxy.

C₁-C₈Alkoxy, C₁-C₆alkoxy and C₁-C₄alkoxy are likewise linear or branched and have e.g. the above-mentioned meanings up to the appropriate number of carbon atoms.

C₁-C₆Alkylthio denotes linear or branched radicals and is, for example, C₁-C₄alkylthio. Examples are methylthio, ethylthio, propylthio, isopropylthio, n-butylthio, sec-butylthio, isobutylthio, tert-butylthio, pentylthio and hexylthio, especially methylthio, ethylthio, propylthio, isopropylthio, n-butylthio, sec-butylthio, isobutylthio, tert-butylthio, preferably methylthio. C₁-C₄Alkylthio is likewise linear or branched and has e.g. the above-mentioned meanings up to the appropriate number of carbon atoms.

Phenyl or benzoyl radicals substituted by halogen, C₁-C₆alkyl, C₁-C₆alkylthio or by C₁-C₆alkoxy are e.g. mono- to penta-substituted, for example mono-, di- or tri-substituted, especially di- or tri-substituted, at the phenyl ring. Preference is given to e.g. 2,4,6-trimethylbenzoyl, 2,6-dichlorobenzoyl, 2,6-dimethylbenzoyl or 2,6-dimethoxybenzoyl.

C₁-C₄Alkylene and C₂-C₆alkylene are linear or branched alkylene, for example C₂-C₄alkylene, e.g. methylene, ethylene, propylene, isopropylene, n-butylene, sec-butylene, isobutylene, tert-butylene, pentylene and hexylene. Preference is given to C₁-C₄alkylene, e.g. ethylene or butylene 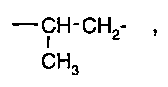 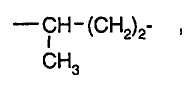 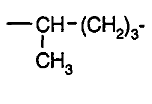 or 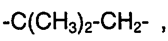 and also methylene and ethylene.

Phenylene-C₁-C₄alkylene is phenylene that is substituted by C₁-C₄alkylene in one position of the aromatic ring, while C₁-C₄alkylene-phenylene-C₁-C₄alkylene is phenylene that is substituted by C₁-C₄alkylene in two positions of the phenylene ring. The alkylene radicals are linear or branched and have, for example, the meanings given above up to the appropriate number of carbon atoms. Examples are 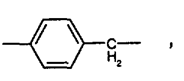 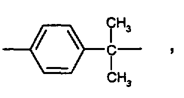 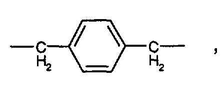 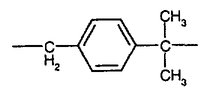 etc..

The alkylene groups may, however, also be positioned at other sites on the phenylene ring, e.g. also in the 1,3-position.

Cycloalkylene is e.g. C₃-C₁₂-, C₃-C₈-cycloalkylene, for example cyclopropylene, cyclopentylene, cyclohexylene, cyclooctylene, cyclododecylene, especially cyclopentylene and cyclohexylene, preferably cyclohexylene. C₃-C₁₂cycloalkylene also denotes, however, structural units such as 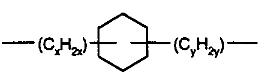 , wherein x and y are each independently of the other from 0 to 6 and the sum of x + y ≤ 6, or 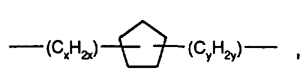 wherein x and y are each independently of the other from 0 to 7 and the sum of x+y≤ 7.

C₂-C₁₂Alkenyl radicals may be mono- or poly-unsaturated and linear or branched and are, for example, C₂-C₈-, C₂-C₆- or C₂-C₄-alkenyl. Examples are allyl, methallyl, 1,1-dimethylallyl, 1-butenyl, 2-butenyl, 1,3-pentadienyl, 1-hexenyl, 1-octenyl, decenyl and dodecenyl, especially allyl.

When R₇ and R₈ together are C₂-C₆alkylene, then together with the carbon atom to which they are bonded they form a C₃-C₇cycloalkyl ring. C₃-C₇cycloalkyl is, for example, cyclopropyl, cyclopentyl, cyclohexyl, cycloheptyl, especially cyclopentyl or cyclohexyl, preferably cyclohexyl.

R_{c}R_{b}C=CRₐ- is, for example, -CH=CH₂ or -C(CH₃)=CH₂, preferably -CH=CH₂.

Typical examples of individual photoinitiators are mentioned below, which can be used either singly or in admixture with one another. For example, benzophenones, benzophenone derivatives, acetophenone, acetophenone derivatives, for example α-hydroxy-cycloalkylphenyl ketone or 2-hydroxy-2-methyl-1-phenyl-propanone, dialkoxyacetophenones, α-hydroxy- or α-amino-acetophenones, for example (4-methylthiobenzoyl)-1-methyl-1-morpholino-ethane, (4-morpholino-benzoyl)-1-benzyl-1-dimethylamino-propane, (4-methyl-thiobenzoyl)-1-methyl-1-morpholino-ethane, (4-morpholino-benzoyl)-1-(4-methyl-benzyl)-1-dimethylamino-propane, 4-aroyl-1,3-dioxolanes, benzoin alkyl ethers and benzil ketals, e.g. benzil dimethyl ketal, phenylglyoxalates and derivatives thereof, dimeric phenylglyoxalates, monoacylphosphine oxides, for example (2,4,6-trimethylbenzoyl)-phenyl-phosphine oxide, bisacylphosphine oxides, for example bis(2,6-dimethoxybenzoyl)-(2,4,4-trimethyl-pent-1-yl)phosphine oxide, bis(2,4,6-trimethylbenzoyl)-phenyl-phosphine oxide or bis(2,4,6-trimethylbenzoyl)-(2,4-dipentyloxyphenyl)phosphine oxide, trisacylphosphine oxides, ferrocenium compounds or titanocenes, for example dicyclopentadienyl-bis(2,6-difluoro-3-pyrrolo-phenyl)-titanium and borate salts.

As coinitiators there come into consideration, for example, sensitisers which shift or broaden the spectral sensitivity and thus bring about an acceleration of the photopolymerisation. They are especially aromatic carbonyl compounds, for example benzophenone, thioxanthone, especially isopropyl thioxanthone, anthraquinone and 3-acylcoumarin derivatives, terphenyls, styryl ketones, and also 3-(aroylmethylene)-thiazolines, camphor quinone, and also eosine, rhodamine and erythrosine dyes.
Amines, for example, can also be regarded as photosensitisers when the photoinitiator layer grafted on according to the invention consists of a benzophenone or benzophenone derivative.

Further examples of photosensitisers are

### 1. Thioxanthones

Thioxanthone, 2-isopropylthioxanthone, 2-chlorothioxanthone, 2-dodecylthioxanthone, 2,4-diethylthioxanthone, 2,4-dimethylthioxanthone, 1-methoxycarbonylthioxanthone, 2-ethoxy-carbonylthioxanthone, 3-(2-methoxyethoxycarbonyl)-thioxanthone, 4-butoxycarbonylthioxanthone, 3-butoxycarbonyl-7-methylthioxanthone, 1-cyano-3-chlorothioxanthone, 1-ethoxycarbonyl-3-chlorothioxanthone, 1-ethoxycarbonyl-3-ethoxythioxanthone, 1-ethoxycarbonyl-3-aminothioxanthone, 1-ethoxycarbonyl-3-phenylsulfurylthioxanthone, 3,4-di[2-(2-methoxyethoxy)ethoxycarbonyl]thioxanthone, 1-ethoxycarbonyl-3-(1-methyl-1-morpholinoethyl)-thioxanthone, 2-methyl-6-dimethoxymethyl-thioxanthone, 2-methyl-6-(1,1-dimethoxybenzyl)-thioxanthone, 2-morpholinomethylthioxanthone, 2-methyl-6-morpholinomethylthioxanthone, N-allylthioxanthone-3,4-dicarboximide, N-octylthioxanthone-3,4-dicarboximide, N-(1,1,3,3-tetramethylbutyl)-thioxanthone-3,4-dicarboximide, 1-phenoxythioxanthone, 6-ethoxycarbonyl-2-methoxythioxanthone, 6-ethoxycarbonyl-2-methylthioxanthone, thioxanthone-2-polyethylene glycol ester, 2-hydroxy-3-(3,4-dimethyl-9-oxo-9H-thioxanthon-2-yloxy)-N,N,N-trimethyl-1-propanaminium chloride;

### 2. Benzophenones

Benzophenone, 4-phenylbenzophenone, 4-methoxybenzophenone, 4,4'-dimethoxybenzophenone, 4,4'-dimethylbenzophenone, 4,4'-dichlorobenzophenone, 4,4'-dimethylaminobenzophenone, 4,4'-diethylaminobenzophenone, 4-methylbenzophenone, 2,4,6-trimethylbenzophenone, 4-(4-methylthiophenyl)-benzophenone, 3,3'-dimethyl-4-methoxybenzophenone, methyl-2-benzoyl benzoate, 4-(2-hydroxyethylthio)-benzophenone, 4-(4-tolylthio)-benzophenone, 4-benzoyl-N,N,N-trimethylbenzenemethanaminium chloride, 2-hydroxy-3-(4-benzoylphenoxy)-N,N,N-trimethyl-1-propanaminium chloride monohydrate, 4-(13-acryloyl-1,4,7,10,13-pentaoxatridecyl)-benzophenone, 4-benzoyl-N,N-dimethyl-N-[2-(1-oxo-2-propenyl)oxy]ethyl-benzenemethanaminium chloride;

### 3. 3-Acylcoumarins

3-Benzoylcoumarin, 3-benzoyl-7-methoxycoumarin, 3-benzoyl-5,7-di(propoxy)coumarin, 3-benzoyl-6,8-dichlorocoumarin, 3-benzoyl-6-chlorocoumarin, 3,3'-carbonyl-bis[5,7-di(propoxy)coumarin], 3,3'-carbony)-bis(7-methoxycoumarin), 3,3'-carbonyl-bis(7-diethylaminocoumarin), 3-isobutyroylcoumarin, 3-benzoyl-5,7-dimethoxycoumarin, 3-benzoyl-5,7-diethoxycoumarin, 3-benzoyl-5,7-dibutoxycoumarin, 3-benzoyl-5,7-di(methoxyethoxy)-coumarin, 3-benzoyl-5,7-di(allyloxy)coumarin, 3-benzoyl-7-dimethylaminocoumarin, 3-benzoyl-7-diethylaminocoumarin, 3-isobutyroyl-7-dimethylaminocoumarin, 5,7-dimethoxy-3-(1-naphthoyl)-coumarin, 5,7-dimethoxy-3-(1-naphthoyl)-coumarin, 3-benzoylbenzo[f]coumarin, 7-diethylamino-3-thienoylcoumarin, 3-(4-cyanobenzoyl)-5,7-dimethoxycoumarin;

### 4. 3-(Aroylmethylene)-thiazolines

3-Methyl-2-benzoylmethylene-β-naphthothiazoline, 3-methyl-2-benzoylmethylene-benzothiazoline, 3-ethyl-2-propionylmethylene-β-naphthothiazoline;

### 5. Other carbonyl compounds

Acetophenone, 3-methoxyacetophenone, 4-phenylacetophenone, benzil, 2-acetylnaphthalene, 2-naphthaldehyde, 9,10-anthraquinone, 9-fluorenone, dibenzosuberone, xanthone, 2,5-bis(4-diethylaminobenzylidene)cyclopentanone, α-(para-dimethylaminobenzylidene)-ketones, such as 2-(4-dimethylamino-benzylidene)-indan-1-one or 3-(4-dimethylaminophenyl)-1-indan-5-yl-propenone, 3-phenylthiophthalimide, N-methyl-3,5-di(ethylthio)phthalimide, N-methyl-3,5-di(ethylthio)phthalimide.

The monomer or/and oligomer, containing at least one ethylenically unsaturated group and one or more hydrophilic groups in the molecule, thereby imparting anti-fogging properties, is for example an acrylate or methacrylate having additionally a -COOH, a -OH, a -NH₂ or a - NH(C₁-C₁₈alkyl) group. Examples are given in the following.

The unsaturated compounds of the radiation-curable composition may contain one or more ethylenically unsaturated double bonds. They may be lower molecular weight (monomeric) or higher molecular weight (oligomeric). Examples of monomers having a double bond are hydroxyalkyl acrylates and methacrylates, e.g. 2-hydroxyethyl acrylate or methacrylate. Further examples are, acrylamide, methacrylamide, N-substituted (meth)acrylamides and acrylic or methacrylic acid.

Examples of monomers having more than one double bond are propylene glycol diacrylate, dipropylene glycol diacrylate, tripropylene glycol diacrylate, neopentyl glycol diacrylate, hexamethylene glycol diacrylate pentaerythritol triacrylate, tris(hydroxyethyl) isocyanurate triacrylate (Sartomer 368; from Cray Valley.

It is also possible in radiation-curable systems to use acrylic esters of alkoxylated polyols, for example glycerol ethoxylate diacrylate, glycerol propoxylate diacrylate, pentaerythritol propoxylate triacrylate, pentaerythritol propoxylate tetraacrylate, neopentyl glycol ethoxylate diacrylate or neopentyl glycol propoxylate diacrylate. The degree of alkoxylation of the polyols used may vary.

Examples of higher molecular weight (oligomeric) polyunsaturated compounds having additionally polar groups, such as -OH, -COOH or NH₂ are acrylated epoxy resins, acrylated or vinyl-ether- or epoxy-group-containing polyesters, polyurethanes and polyethers. Further examples of unsaturated oligomers are unsaturated polyester resins, which are usually produced from maleic acid, phthalic acid and one or more diols and have molecular weights of about from 500 to 3000. In addition it is also possible to use vinyl ether monomers and oligomers, and also maleate-terminated oligomers having polyester, polyurethane, polyether, polyvinyl ether and epoxide main chains. In particular, combinations of vinyl-ether-group-carrying oligomers and polymers, as described in WO 90/01512, are very suitable, but copolymers of monomers functionalised with maleic acid and vinyl ether also come into consideration. Such unsaturated oligomers can also be termed prepolymers.

Especially suitable are, for example, esters of ethylenically unsaturated carboxylic acids and polyols or polyepoxides, and polymers having ethylenically unsaturated groups in the chain or in side groups, e.g. unsaturated polyesters, polyamides and polyurethanes and copolymers thereof.

Examples of unsaturated carboxylic acids are acrylic acid, methacrylic acid, crotonic acid, itaconic acid, cinnamic acid and unsaturated fatty acids such as linolenic acid or oleic acid. Acrylic and methacrylic acid are preferred.

Suitable polyols are aromatic and especially aliphatic and cycloaliphatic polyols. Examples of aromatic polyols are hydroquinone, 4,4'-dihydroxydiphenyl, 2,2-di(4-hydroxyphenyl)propane, and novolaks and resols. Examples of polyepoxides are those based on the said polyols, especially the aromatic polyols and epichlorohydrin. Also suitable as polyols are polymers and copolymers that contain hydroxyl groups in the polymer chain or in side groups, e.g. polyvinyl alcohol and copolymers thereof or polymethacrylic acid hydroxyalkyl esters or copolymers thereof. Further suitable polyols are oligoesters having hydroxyl terminal groups.

Examples of aliphatic and cycloaliphatic polyols include alkylenediols having preferably from 2 to 12 carbon atoms, such as ethylene glycol, 1,2- or 1,3-propanediol, 1,2-, 1,3- or 1,4-butanediol, pentanediol, hexanediol, octanediol, dodecanediol, diethylene glycol, triethylene glycol, polyethylene glycols having molecular weights of preferably from 200 to 1500, 1,3-cyclopentanediol, 1,2-, 1,3- or 1,4-cyclohexanediol, 1,4-dihydroxymethylcyclohexane, glycerol, tris(β-hydroxyethyl)amine, trimethylolethane, trimethylolpropane, pentaerythritol, dipentaerythritol and sorbitol.

The polyols are partially esterified by one or by different unsaturated carboxylic acid(s).

Examples of esters are:
pentaerythritol diacrylate, pentaerythritol triacrylate, dipentaerythritol diacrylate, dipentaerythritol triacrylate, dipentaerythritol tetraacrylate, dipentaerythritol pentaacrylate, pentaerythritol dimethacrylate, pentaerythritol trimethacrylate, dipentaerythritol dimethacrylate, dipentaerythritol tetramethacrylate, pentaerythritol diitaconate, dipentaerythritol trisitaconate, sorbitol triacrylate, sorbitol tetraacrylate, pentaerythritol-modified triacrylate, sorbitol tetramethacrylate, sorbitol pentaacrylate, oligoester acrylates and methacrylates, glycerol di-acrylate,.

Also suitable as a component are the amides of identical or different unsaturated carboxylic acids and aromatic, cycloaliphatic and aliphatic polyamines having preferably from 2 to 6, especially from 2 to 4, amino groups. Examples of such polyamines are ethylenediamine, 1,2- or 1,3-propylenediamine, 1,2-, 1,3- or 1,4-butylenediamine, 1,5-pentylenediamine, 1,6-hexylenediamine, octylenediamine, dodecylenediamine, 1,4-diamino-cyclohexane, isophoronediamine, phenylenediamine, bisphenylenediamine, di-β-aminoethyl ether, diethylenetriamine, triethylenetetramine and di(β-aminoethoxy)- and di(β-aminopropoxy)-ethane. Further suitable polyamines are polymers and copolymers which may have additional amino groups in the side chain and oligoamides having amino terminal groups. Examples of such unsaturated amides are: methylene bisacrylamide, 1,6-hexamethylene bisacrylamide, diethylenetriamine trismethacrylamide, bis(methacrylamidopropoxy)ethane, β-methacryl-amidoethyl methacrylate and N-[(β-hydroxyethoxy)ethyl]-acrylamide.

Special preference is given to acrylic acid, hexanediol monoacrylate, pentaerythritol triacrylate, pentaerythritol diacrylate, pentaerythritol monoacrylate, 2-hydroxyethyl acrylate, hydroxypropyl acrylate, tri(propylene glycol) glycerolate diacrylate, 2,3-dihydroxypropylacrylate, 2,3-dihydroxypropylacrylate, glycerol 1,3-diglycerolate diacrylate, sorbitol monoacrylate, .N.-(2,3,4,5,6-pentahydroxy-hexyl)-acrylamide and the corresponding methacrylic acid and derivatives.

In the context of the present invention the term (meth)acrylate includes both the acrylate and the methacrylate. An acrylate or methacrylate compound is especially used as the mono- or poly-ethylenically unsaturated compound.

Very special preference is given to polyunsaturated acrylate compounds, such as have already been mentioned above.

Special preference is given to a process wherein at least one of the ethylenically unsaturated monomers or oligomers is a mono-, di-, tri- or tetra-functional acrylate or methacrylate.

Alternatively the process may be carried out using a monomer or/and oligomer, containing at least one ethylenically unsaturated group and one or more hydrophilic groups in the molecule, thereby imparting anti-fogging properties, which is of formula I, II III or IV 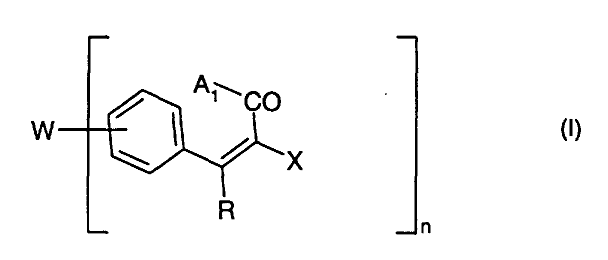 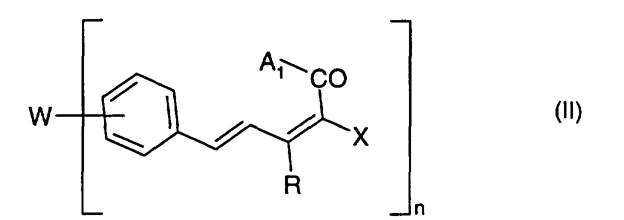 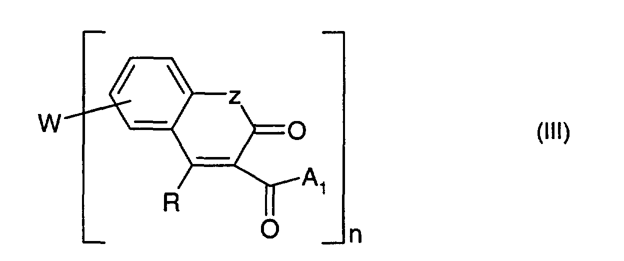 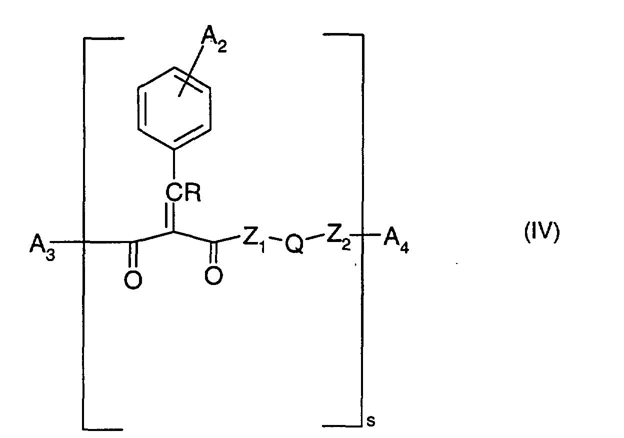 wherein,
- A₁: is a residue selected from the group consisting of polyol, sorbitol, sorbitane, glycerol, diglycerol, polyglycerol, ethoxylated and/or propoxylated glycerol, ethoxylated and/or propoxylated sorbitane, hydroxy C₁-C₄alkylamine, a polyoxyalkylene ether residue of the formula -O-[-CHR₁-(CH₂)ᵣO]_{q}-CHR₁-(CH₂)ᵣ-OR₂ or a residue of the formula -O-(-CHR₁-(CH₂)ᵣ]_{g} -(CF₂)ⱼ- CF₃, wherein
R₁ is hydrogen or C₁-C₄alkyl,
R₂ is C₁-C₂₀alkyl,
g is from 0 to 5,
j is from 1 to 20,
r is 1, 2, 3 or 4,
q is from 1 to 100,
- X: is hydrogen, CN, -C(O)R₃, -C(O)OR₄, -C(O)A₁, wherein
R₃ and R₄ each independently are hydrogen, C₁ -C₂₀alkyl,
C₁-C₂₀hydroxyalkyl, C₅-C₈cycloalkyl, C₂ -C₂₀alkenyl, C₂-C₂₀alkynyl or C₆-C₂₀aryl,
- R: is hydrogen, C₁-C₂₀alkyl, C₁-C₂₀hydroxyalkyl, C₅-C₈cycloalkyl, C₂ -C₂₀alkenyl, C₂-C₂₀alkynyl -or C₆-C₂₀aryl,
- Z: is O, S or NR₅ wherein
R₅ is hydrogen, C₁ -C₂₀alkyl or C₁-C₂₀hydroxyalkyl,
- W: is an organic radical of valency equal to n,
- n: is 1, 2, 3 or 4,
- A₂: is hydrogen, OR₆ -NR₇R₈, -SR₉, -OCH₂C(O)-A₁ or -C(O)-A₁ wherein
R₆, R₇, R₈, R₉ each independently are hydrogen, C₁ -C₂₀alkyl,
C₁-C₂₀hydroxyalkyl, C₅-C₈cycloalkyl, C₂ -C₂₀alkenyl, C₂-C₂₀alkynyl or C₆-C₂₀aryl,
- A₃: is C₁-C₆alkoxy,
- A₄: is H, C₁-C₆alkyl,
- Q: is -CH₂-CH₂-(NR₁₀)-CH₂-CH₂-, -(CHR₁₁-CH₂)ₚ-, - CR₁₁H-CH₂-O-(CHR₁₁-CH₂-O-)ₚ-CHR₁₁-CH₂-, wherein
R₁₀ is hydrogen, C₁ -C₂₀alkyl, C₁-C₂₀hydroxyalkyl,
R₁₁ is hydrogen or C₁-C₄alkyl,
p is from 1 to 100,
- Z₁ and Z₂: each independently are O, S or NR₁₂ wherein
R₁₂ is hydrogen, C₁ -C₂₀alkyl, C₁-C₂₀hydroxyalkyl, and
- s: is from 2 to 50.

Of special interest are compounds of formula I, II, III or IV, wherein
- A₁: is a residue selected from the group consisting of polyol, sorbitol, sorbitane, glycerol, diglycerol, polyglycerol, ethoxylated and/or propoxylated glycerol, ethoxylated and/or propoxylated sorbitane, hydroxy C₁-C₄alkylamine or a polyoxyalkylene ether residue of the formula
-O-[-CHR₁-(CH₂)ᵣO]_{q}-CHR₁-(CH₂)ᵣ-OR₂ wherein
R₁ is hydrogen or C₁-C₄alkyl,
R₂ is C₁-C₂₀alkyl,
r is 1, 2, 3 or 4,
q is from 1 to 100,
- X: is hydrogen, CN, -C(O)R₃, -C(O)OR₄, -C(O)A₁, wherein
R₃ and R₄ each independently are hydrogen, C₁ -C₂₀alkyl,
C₁-C₂₀hydroxyalkyl, C₅-C₈cycloalkyl, C₂ -C₂₀alkenyl, C₂-C₂₀alkynyl or C₆-C₂₀aryl,
- R: is hydrogen, C₁-C₂₀alkyl, C₁-C₂₀hydroxyalkyl, C₅-C₈cycloalkyl, C₂ -C₂₀alkenyl, C₂-C₂₀alkynyl or C₆-C₂₀aryl,
- Z: is O, S or NR₅ wherein
R₅ is hydrogen, C₁ -C₂₀alkyl or C₁-C₂₀hydroxyalkyl,
- W: is an organic radical of valency equal to n,
- n: is 1, 2, 3 or 4,
- A₂: is hydrogen, OR₆ -NR₇R₈, -SR₉, -OCH₂C(0)-A₁ or -C(O)-A₁ wherein
R₆, R₇, R₈, R₉ each independently are hydrogen, C₁ -C₂₀alkyl,
C₁-C₂₀hydroxyalkyl, C₅-C₈cycloalkyl, C₂ -C₂₀alkenyl, C₂-C₂₀alkynyl or C₆-C₂₀aryl,
- A₃: is C₁-C₆alkoxy,
- A₄: is H, C₁-C₆alkyl,
- Q: is -CH₂-CH₂-(NR₁₀)-CH₂-CH₂-, -(CHR₁₁-CH₂)ₚ-, -CR₁₁H-CH₂-O-(CHR₁₁-CH₂-O-)ₚ-CHR₁₁-CH₂-, wherein
R₁₀ is hydrogen, C₁ -C₂₀alkyl, C₁-C₂₀hydroxyalkyl,
R₁₁ is hydrogen or C₁-C₄alkyl,
p is from 1 to 100,
- Z₁ and Z₂: each independently are O, S or NR₁₂ wherein
R₁₂ is hydrogen, C₁ -C₂₀alkyl, C₁-C₂₀hydroxyalkyl, and
- s: is from 2 to 50.

When n is 2,3 or 4 each of the radical A₁, X, R, Z can have the same or a different meaning in the units of the formulae I, II or III. Thus, the organic radical W can be as follows:
- when n is 1,: W is A₂ as defined above;
- when n is 2,: W is -O-(Q)-O- ,-(R₁₃)N-(Q)-N(R₁₄)-, -S-(Q)-S-, -OC(O)-(Q)-C(O)O-, - OC(S)-(Q)-C(S)O- , -NC(O)-(Q)-C(O)N-, wherein
Q is as definedabove,
R₁₃ and R₁₄ each independently are hydrogen, C₁ -C₂₀alkyl or C₁-C₂₀hydroxyalkyl,
- when n is 3.: W is a trivalent residue of the formula 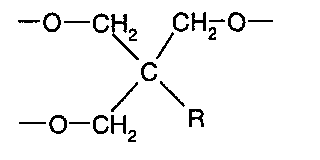 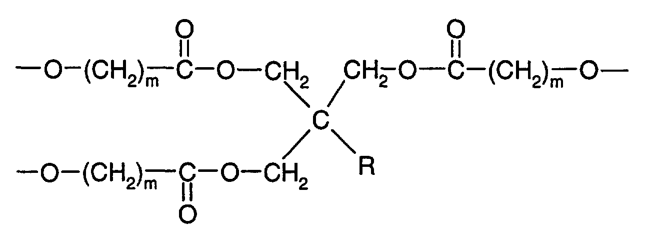 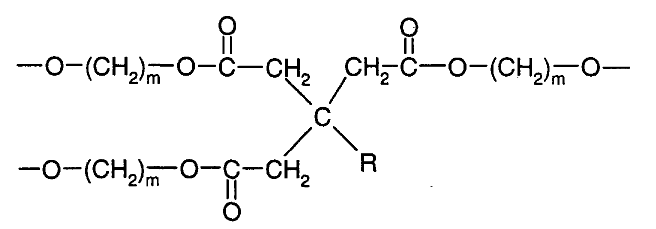 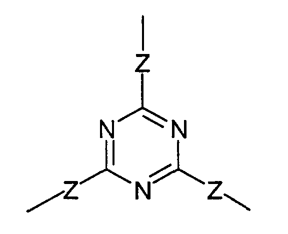 with R and Z as defined in claim 1 and m is 1 to 6
- when n is 4,: W is a tetravalent residue of the formula 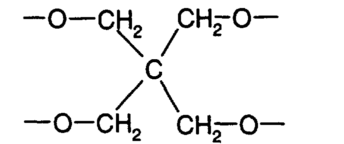 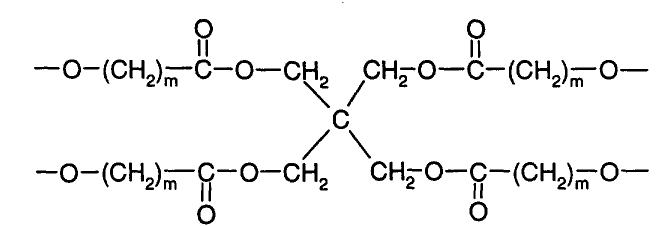 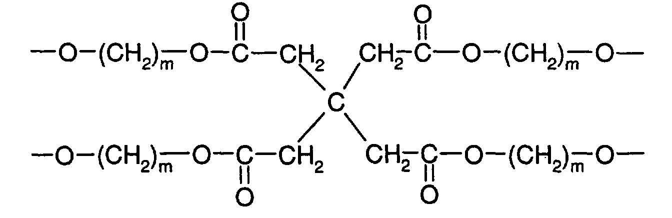 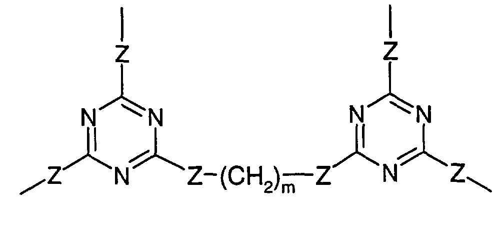 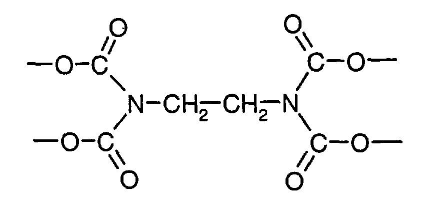 with Z as defined above and m is 1 to 6.

The term "alkyl" by itself or as part of another substituent means, a straight or branched chain monovalent hydrocarbon radical such as methyl, ethyl, n-propyl, isopropyl, n-butyl, tertiary butyl, isobutyl, sec-butyl, tert butyl, n-pentyl, isopentyl, neopentyl, heptyl, hexyl, 2-ethylhexyl, octyl, nonyl, decyl, undecyl, dodecyl, tridecyl, tetradecyl, hexadecyl, octadecyl and the like. The term "alkyl" includes C₁-C₄alkyl, C₁-C₆alkyl, C₁-C₂₀alkyl.

The term "alkenyl", as used herein, represents an olefinically unsaturated branched or linear group having at least one double bond. Examples of such groups include radicals such as vinyl, allyl, 2-butenyl, 3-butenyl, 2-pentenyl, 3-pentenyl, 4-pentenyl, 2-hexenyl, 3-hexenyl, 4-hexenyl, 5-hexenyl, 2-heptenyl, 3-heptenyl, 4-heptenyl, 5-heptenyl, 6-heptenyl as well as dienes and trienes of straight and branched chains.

The term "alkynyl" as used herein, represents such radicals as ethynyl, propynyl, butynyl, pentynyl, hexynyl, or heptynyl.

The term "hydroxyalkyl", as used herein, represents alkyl radicals having one or more hydroxy substituents.

The term "C₆-C₂₀ aryl", as used herein, represents phenyl, naphthyl, phenantrenyl, fluorenyl, perilenyl.

The term "polyol", as used herein, refers to alcohols containing two or more hydroxyl groups and includes for example ethylene glycol, diethylene glycol, triethylene glycol, propylene glycol, dipropylene glycol, 1,3-propane diol, 2-(C₁-C₄alkyl)propane 1,3-diol, 1,4-butane diol, 1,5-pentane diol, 1,6-hexane diol and neopentyl glycol.

The term "polyglycerol", as used herein, refers to molecules having from 3 to 30 glycerol units per molecule.

The term "hydroxy C₁-C₄alkylamine", as used herein, includes for example ethanolamine, diethanolamine, tri-ethanolamine, isopropanolamine, di-isopropanolamine, tri-isopropanolamine, tris-(hydroxymethyl)amino methane and the like.

Concerning the compounds of the formula I, II or III, those are preferred wherein n is 1.

Especially preferred are the compounds wherein
- n: is 1,
- W: is hydrogen or C₁-C₂₀alkoxy,
- A₁: is a polyoxyalkylene ether residue of the formula -O-[-CH₂-CH₂-O]_{q}-CH₂-CH₂-OR₁₁, wherein q is from 4 to 30; -O-CH₂-CH₂-(CF₂)ⱼ-CF₃, wherein j is from 3 to 8; a glycerol residue or a sorbitane residue,
- X: is -C(O)A₁,
- Z: is O, and
- R: is hydrogen.

Concerning the compounds of formula IV, those are preferred wherein
- s: is from 5 to 10,
- A₂: is hydrogen or C₁-C₂₀alkoxy,
- Z₁ and Z₂: are O,
- Q: is -CH₂-CH₂-O-(CH₂-CH₂-O)p-CH₂-CH₂- ,
- p: is from 4 to 30,
- R: is hydrogen,
- A₃: is OC₂H₅,
- A₄: is hydrogen.

The above compounds are known and can be prepared according to WO 02/072530.

The application of the photoinitiators, or mixtures thereof with one another or with monomers or oligomers can be in the form of melts, solutions, dispersions, suspensions or emulsions and can be carried out in various ways. Application can be effected by immersion, spraying, coating, brush application, knife application, roller application, printing, spin-coating and pouring. In the case of mixtures of photoinitiators with one another and with coinitiators and sensitisers, all possible mixing ratios can be used.

The photoinitiators are preferably applied in the form of mixtures with monomers/oligomers or/and solvents or/and water in the form of liquids, solutions, emulsions or suspensions. The concentration of monomers/oligomers and photoinitiator in water or in a suitable solvent are, for example, of from 0.01 to 99.9 %, or 0.01-80 %, e.g. 0.05-50 %, or 1-50 %, based on the solution being applied. The liquids comprising the photoinitiator and monomer/oligomer may, in addition, contain e.g. further substances, such as defoamers, emulsifiers, surfactants, antifouling agents, wetting agents and other additives customarily used in the industry, especially the coating and paint industries.

The weight ratio of monomer/oligomer to photoinitiator is for example from 1000:1 to 1:1, for instance from 50:1 to 5:1, in particular from 10:1 to 5:1.

Typical individual photoinitiator concentrations range from 0.01 % to 5% by weight based on the weight of the solution.

Typical monomer/oligomer concentrations range from 0.5% to 40% by weight based on the weight of the solution.

It is not necessary to apply the photoinitiator and the monomer/oligomer from one solution, it is also possible to apply both consecutively.

Suitable solvents are in principle any substances in which the photoinitiator, or the photoinitiators, can be converted into a state suitable for application, whether in the form of a solution or in the form of a suspension or emulsion. Suitable solvents are, for example, alcohols, such as ethanol, propanol, isopropanol, butanol, ethylene glycol etc., ketones, such as acetone, methyl ethyl ketone, acetonitrile, aromatic hydrocarbons, such as toluene and xylene, esters and aldehydes, such as ethyl acetate, ethyl formate, aliphatic hydrocarbons, e.g. petroleum ether, pentane, hexane, cyclohexane, halogenated hydrocarbons, such as dichloromethane, choroform, or alternatively oils, natural oils, castor oil, vegetable oil etc., and also synthetic oils. This description is on no account exhaustive and is given merely by way of example. Alcohols, water and esters are preferred.

The coating can be effected by means of pouring, immersion, spraying, coating, knife application, roller application or spin-coating.

After the application of the coating, the workpiece can be stored or immediately processed further.

The coating layer deposited has preferably a dry filmthickness ranging from e.g. a monomolecular layer up to 5µ, especially from 5 nm to 1000 nm.

Prior to exposing the coated thermoplastic substrate to UVNIS radiation or an electron beam, step c) it may optionally be dried. Many possible methods of drying coatings are known and they can all be used in the claimed process. For example, it is possible to use hot gases, IR radiators, microwaves and radio frequency radiators, ovens and heated rollers. Drying can also be effected, for example, by absorption, e.g. penetration into the substrate. Drying can take place, for example, at temperatures of from 0°C to 300°C, for example from 20°C to 200°C.

In the context of the present invention, UVNIS radiation is to be understood as being electromagnetic radiation in a wavelength range from 150 nm to 700 nm. Preference is given to the range from 250 nm to 500 nm. Suitable lamps are known to the person skilled in the art and are commercially available.
The photosensitivity of the compositions usually extends from approximately 150 nm to approximately 600 nm. A large number of the most varied kinds of light source may be used. Both point sources and planiform radiators (lamp arrays) are suitable. Examples are: carbon arc lamps, xenon arc lamps, medium-pressure, super-high-pressure, high-pressure and low-pressure mercury radiators doped, where appropriate, with metal halides (metal halide lamps), microwave-excited metal vapour lamps, excimer lamps, superactinic fluorescent tubes, fluorescent lamps, argon incandescent lamps, flash lamps, photographic floodlight lamps, light-emitting diodes (LED), electron beams and X-rays. The distance between the lamp and the substrate to be irradiated may vary according to the intended use and the type and strength of the lamp and may be, for example, from 2 cm to 150 cm. Also suitable are laser light sources, for example excimer lasers, such as Krypton-F lasers for irradiation at 248 nm. Lasers in the visible range may also be used.

In principle, it is advantageous to apply the coating as quickly as possible after the plasma-, corona- or flame-pretreatment, but for many purposes it may also be acceptable to carry out reaction step b) after a time delay. It is preferable, however, to carry out process step b) immediately after process step a) or within 24 hours after process step a).

Of interest is a process wherein process step c) is carried out immediately after process step b) or within 24 hours after process step b).

Advantageously the dose of radiation used in process step c) is e.g. from 1 to 1000 mJ/cm², such as 1-800 mJ/cm², or, for example, 1-500 mJ/cm², e.g. from 5 to 300 mJ/cm², preferably from 10 to 200 mJ/cm².

Another aspect of the invention is the use of a photoinitiator and a monomer or/and oligomer, containing at least one ethylenically unsaturated group and one or more hydrophilic groups in the molecule, thereby imparting anti-fogging properties in the above process.

Yet a further aspect is a thermoplastic substrate with a strongly adherent coating having anti-fogging properties obtainable by the above process.

Preferences and definitions mentioned for the process, apply also for the other aspects of the invention.

The following examples illustrate the invention.

### Test Procedure for Assessing Anti-Fog Properties (cold-fog test)

This test simulates the anti-fogging performance of a film, which is used for a packaging system for food, stored in a refrigerator. 200ml water is put in a 250ml beaker and the top is covered with a sample of the test film. The beaker is placed in a temperature-controlled cabinet at 4°C.

The appearance of the film is visually examined after a certain time interval. The following rating is applied:

| Rating for Cold fog Tests: | | |
|---|---|---|
| Description | Rating | Comments |
| An opaque layer of small fog droplets | A (Bad) | Zero visibility, poor light |
| An opaque layer of large droplets | B (Bad) | Zero visibility, poor light transmission |
| Complete layer of large transparent droplets | C (Poor) | Poor visibility, lens effect, dripping |
| Randomly scattered large transp. droplets | D (Fair) | Discontinuous film of water |
| Few small or large transparent droplets | D/E (Good) | Discontinuous. water film, mostly transparent |
| A transparent film showing no water | E (Excellent) | Completely transparent |

### Example 1

A biaxially oriented polypropylene film (30 µm thick, RADICI) is corona-treated two times in air using a ceramic electrode (hand-held corona station type CEE 42-0-1 MD, width 330 mm, SOFTAL) at a distance of about 1-2 mm and at an output of 600 W and a treatment speed of 30m/s.
A 2-propanol solution containing 0.1 % of photoinitiator, Irgacure 819 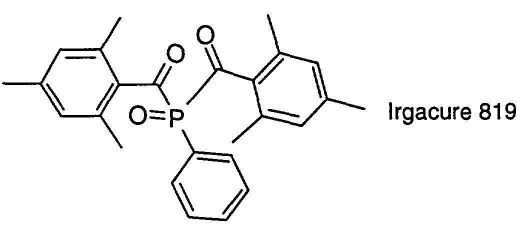 and 1 % of hydrophilic graftable compound, which is glycerin 1,3-dimethacrylate (Aldrich), of formula

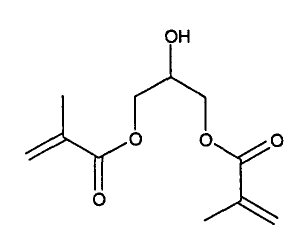

is applied to the treated side of the film using a 4 µm doctor blade (Erichsen). After drying, the film is irradiated using a UV processor (Fusion System) with a microwave-excited mercury lamp and an output of 120 W/cm at a belt speed of 30m/min.
The grafting amount of the hydrophilic acrylic derivative on the polymer surface is determined by:
Rub Test (ASTM D,4752 test procedure) and FTIR and UV spectral analysis. Both test show that the anti-fogging compound is grafted to a significant extent.
The anti-fog effect of the so obtained film is determined by the "Cold Fog" test procedure mentioned above and shows a rating according to D/E.

### Example 2:

As described in Example 1, a biaxially oriented polypropylene film (30 µm thick, RADICI) is corona-treated and coated with a 2-propanol solution containing 0.1% of the photoinitiator of Example 1 and 1% of the hydrophilic graftable compound 101 prepared in accordance with WO02072530 having the following formula

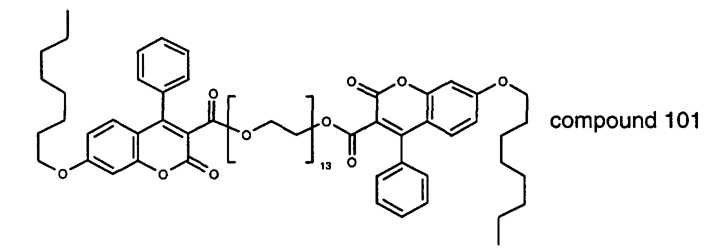

The anti-fog effect of the so obtained film is determined by "Cold Fog" test procedure mentioned above;

| Appearance after | Hours | | | | Days | | | |
|---|---|---|---|---|---|---|---|---|
| | 1 | 2 | 3 | 6 | 1 | 4 | 6 | 11 |
| Example 2 | E | E | E | E | E | E | | |

### Example 3:

As described in Example 1, a biaxially oriented polypropylene film (30 µm thick, RADICI) is corona-treated and coated with a 2-propanol solution containing 0.1 % of the photoinitiator of Example 1 and 1 % of the hydrophilic graftable compound 102 prepared according to WO02072530 having the following formula

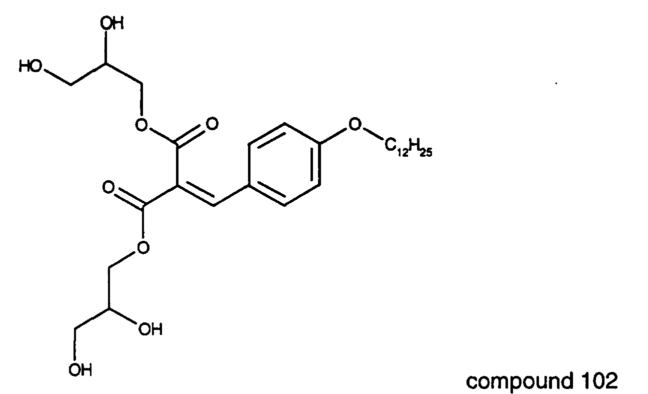

The anti-fog effect of the so obtained film is determined by "Cold Fog" test procedure mentioned above:

| Appearance after | Hours | | | | Days | | | |
|---|---|---|---|---|---|---|---|---|
| | 1 | 2 | 3 | 6 | 1 | 4 | 6 | 11 |
| Example 3 | E | E | E | E | E | E | | |

## Claims

1. A process for the production of a strongly adherent anti-fogging coating on a thermoplastic substrate, comprising the steps
a) applying a low temperature plasma treatment, a corona discharge treatment or a flame treatment to a thermoplastic substrate,
b) coating the treated side of the thermoplastic substrate under atmospheric pressure with one or more photoinitiators or mixtures of photoinitiators together with a monomer or/and oligomer, containing at least one ethylenically unsaturated group and one or more hydrophilic groups in the molecule, thereby imparting anti-fogging properties to the molecule, and
c) exposing the coated thermoplastic substrate to UV/VIS radiation or an electron beam.

2. A process according to claim 1 wherein the thermoplastic substrate is a polyolefin.

3. A process according to claim 1 wherein in step a) a corona discharge treatment is applied.

4. A process according to claim 1 wherein the photoinitiator is selected from the group consisting of benzoins, benzil ketals, acetophenones, hydroxyalkylphenones, aminoalkylphenones, acylphosphine oxides, acylphosphine sulfides, acyloxyiminoketones, alkylamino-substituted ketones, such as Michler's ketone, peroxy compounds, dinitrile compounds, halogenated acetophenones, phenylglyoxylates, dimeric phenylglyoxalates, benzophenones, oximes and oxime esters, thioxanthones, coumarins, ferrocenes, titanocenes, onium salts, sulfonium salts, iodonium salts, diazonium salts, borates, triazines, bisimidazoles, polysilanes and dyes.

5. A process according to claim 1, wherein the photoinitiator is a compound of formula X or Xa
(RG)-A-(IN) (X),
(IN)-A-(RG')-A-(IN) (Xa),
wherein
(IN) is a photoinitiator base structure;
A is a spacer group or a single bond;
(RG) is hydrogen or at least one functional ethylenically unsaturated group; and
(RG') is a single bond or a divalent radical that contains at least one functional ethylenically unsaturated group, or is a trivalent radical.

6. A process according to claim 5, wherein in the compound of formula X or Xa (IN) is a photoinitiator base structure of formula (XII) or (XIII) 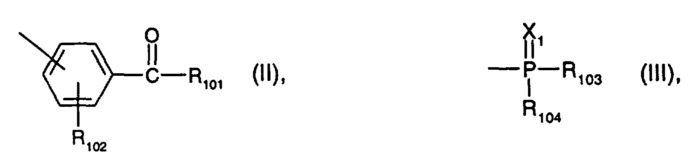
R₁₀₁ is a group (A), (B), (C) or (XIII) 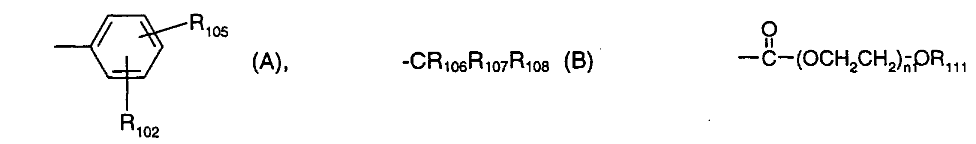
(C);
n₁ is a number from 0 to 6;
R₁₀₂ is hydrogen, C₁-C₁₂alkyl, halogen, the group (RG)-A- or, when R₁₀₁ is a group (A), two radicals R₁₀₂ in the ortho-position to the carbonyl group may also together be -S- or 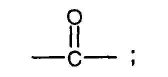
R₁₀₃ and R₁₀₄ are each independently of the other C₁-C₆alkyl, C₁-C₆alkanoyl, phenyl or benzoyl, the radicals phenyl and benzoyl each being unsubstituted or substituted by halogen, C₁-C₆alkyl, C₁-C₆alkylthio or by C₁-C₆alkoxy;
R₁₀₅ is hydrogen, halogen, C₁-C₁₂alkyl or C₁-C₁₂alkoxy or the group (RG)-A- ;
R₁₀₆ is OR₁₀₉ or N(R₁₀₉)₂ or is 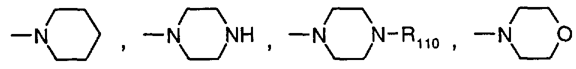 or SO₂R₁₀₉;
R₁₀₇ and R₁₀₈ are each independently of the other hydrogen, C₁-C₁₂alkyl, C₂-C₁₂alkenyl, C₁-C₁₂alkoxy, phenyl or benzyl or R₁₀₇ and R₁₀₈ together are C₂-C₆alkylene;
R₁₀₉ is hydrogen, C₁-C₆alkyl or C₁-C₆alkanoyl;
R₁₁₀ is hydrogen, C₁-C₁₂alkyl or phenyl;
R₁₁₁ is C₁-C₄alkyl or 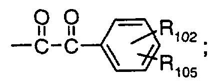 and
X₁ is oxygen or sulfur.

7. A process according to claim 6, wherein in the compound of formula X or Xa (RG) is R_{c}R_{b}C=CRₐ-; 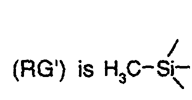 or 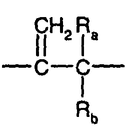 , and
Rₐ, R_{b} and R_{c} are each independently of the other hydrogen or C₁-C₆alkyl, especially hydrogen or methyl.

8. A process according to claim 1 wherein the monomer or/and oligomer, containing at least one ethylenically unsaturated group and one or more hydrophilic groups in the molecule, thereby imparting anti-fogging properties, is an acrylate or methacrylate having additionally a -COOH, a -OH, a -NH₂ or a -NH(C₁-C₁₈alkyl) group.

9. A process according to claim 1 wherein the monomer or/and oligomer, containing at least one ethylenically unsaturated group and one or more hydrophilic groups in the molecule, thereby imparting anti-fogging properties, is of formula I, II III or IV 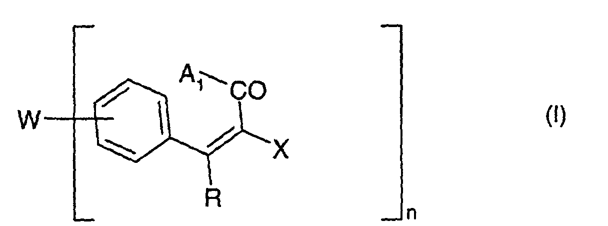 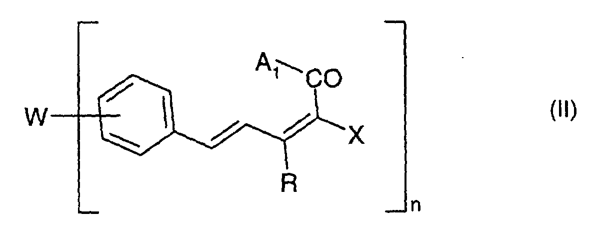 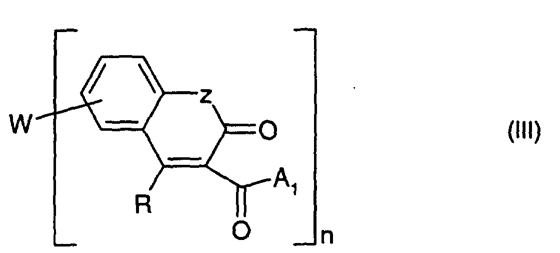 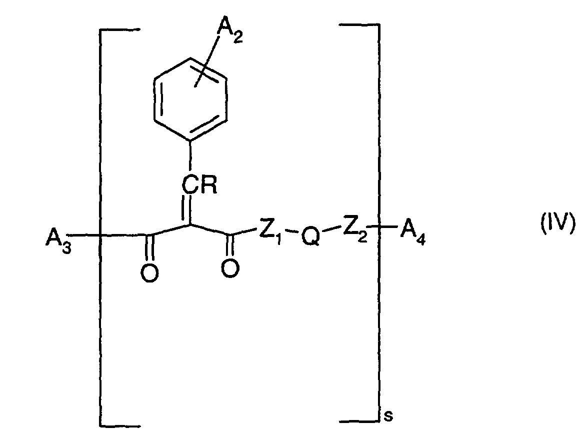 wherein,
A₁ is a residue selected from the group consisting of polyol, sorbitol, sorbitane, glycerol, diglycerol, polyglycerol, ethoxylated and/or propoxylated glycerol, ethoxylated and/or propoxylated sorbitane, hydroxy C₁-C₄alkylamine, a polyoxyalkylene ether residue of the formula -O-[-CHR₁-(CH₂)ᵣO]_{q}-CHR₁CH₂)ᵣ-OR₂ or a residue of the formula -O-[-CHR₁-(CH₂)ᵣ]_{g}- (CF₂)ⱼ- CF₃, wherein
R₁ is hydrogen or C₁-C₄alkyl,
R₂ is C₁-C₂₀alkyl,
g is from 0 to 5,
j is from 1 to 20,
r is 1, 2, 3 or 4,
q is from 1 to 100,
X is hydrogen, CN, -C(O)R₃, -C(O)OR₄, -C(O)A₁, wherein
R₃ and R₄ each independently are hydrogen, C₁ -C₂₀ alkyl,
C₁-C₂₀hydroxya)ky), C₅-C₈cycloalkyl, C₂ -C₂₀alkenyl, C₂-C₂₀alkynyl or C₆-C₂₀aryl,
R is hydrogen, C₁-C₂₀alkyl, C₁-C₂₀hydroxyalkyl, C₅-C₈cycloalkyl, C₂ -C₂₀alkenyl, C₂-C₂₀alkynyl or C₆-C₂₀aryl,
Z is O, S or NR₅ wherein
R₅ is hydrogen, C₁ -C₂₀alkyl or C₁-C₂₀hydroxyalkyl,
W is an organic radical of valency equal to n,
n is 1, 2, 3 or 4,
A₂ is hydrogen, OR₆ -NR₇R₈, -SR₉, -OCH₂C(O)-A₁ or -C(O)-A₁, wherein
R₆, R₇, R₈, R₉ each independently are hydrogen, C₁ -C₂₀alkyl,
C₁-C₂₀hydroxyalkyl, C₅-C₈cycloalkyl, C₂ -C₂₀alkenyl, C₂-C₂₀alkynyl or C₆-C₂₀aryl,
A₃ is C₁-C₆alkoxy,
A₄ is H, C₁-C₆alkyl,
Q is -CH₂-CH₂-(NR₁₀)-CH₂-CH₂-, -(CHR₁₁-CH₂)ₚ-, -CR₁₁H-CH₂-O-(CHR₁₁-CH₂-O-)ₚ-CHR₁₁-CH₂-, wherein
R₁₀ is hydrogen, C₁ -C₂₀alkyl, C₁-C₂₀hydroxyalkyl,
R₁₁ is hydrogen or C₁-C₄alkyl,
p is from 1 to 100,
Z₁ and Z₂ each independently are O, S or NR₁₂ wherein
R₁₂ is hydrogen, C₁ -C₂₀alkyl, C₁-C₂₀hydroxyalkyl, and
s is from 2 to 50.

10. A process according to claim 9, wherein
A₁ is a residue selected from the group consisting of polyol, sorbitol, sorbitane, glycerol, diglycerol, polyglycerol, ethoxylated and/or propoxylated glycerol, ethoxylated and/or propoxylated sorbitane, hydroxy C₁-C₄alkylamine or a polyoxyalkylene ether residue of the formula
-O-[-CHR₁-(CH₂)ᵣO]_{q}-CHR₁-(CH₂)ᵣ-OR₂ wherein
R₁ is hydrogen or C₁-C₄alkyl,
R₂ is C₁-C₂₀alkyl,
r is 1, 2, 3 or 4,
q is from 1 to 100,
X is hydrogen, CN, -C(O)R₃, -C(O)OR₄, -C(O)A₁, wherein
R₃ and R₄ each independently are hydrogen, C₁ -C₂₀alkyl,
C₁-C₂₀hydroxyalkyl, C₅-C₈cycloalkyl, C₂-C₂₀alkenyl, C₂-C₂₀alkynyl or C₆-C₂₀aryl,
R is hydrogen, C₁-C₂₀alkyl, C₁-C₂₀hydroxyalkyl, C₅-C₈cycloalkyl, C₂-C₂₀alkenyl, C₂-C₂₀alkynyl or C₆-C₂₀aryl,
Z is O, S or NR₅ wherein
R₅ is hydrogen, C₁-C₂₀alkyl or C₁-C₂₀hydroxyalkyl,
W is an organic radical of valency equal to n,
n is 1, 2, 3 or 4,
A₂ is hydrogen, OR₆ -NR₇R₈, -SR₉, -OCH₂C(O)-A₁ or -C(O)-A₁, wherein
R₆, R₇, R₈, R₉ each independently are hydrogen, C₁-C₂₀alkyl,
C₁-C₂₀hydroxyalkyl, C₅-C₈cycloalkyl, C₂-C₂₀alkenyl, C₂-C₂₀alkynyl or C₆-C₂₀aryl,
A₃ is C₁-C₆alkoxy,
A₄ is H, C₁-C₆alkyl,
Q is -CH₂-CH₂-(NR₁₀)-CH₂-CH₂-, -(CHR₁₁-CH₂)ₚ-, -CR₁₁H-CH₂-O-(CHR₁₁-CH₂-O-)ₚ-CHR₁₁-CH₂-, wherein
R₁₀ is hydrogen, C₁ -C₂₀alkyl, C₁-C₂₀hydroxyalkyl,
R₁₁ is hydrogen or C₁-C₄alkyl,
p is from 1 to 100,
Z₁ and Z₂ each independently are O, S or NR₁₂ wherein
R₁₂ is hydrogen, C₁-C₂₀alkyl, C₁-C₂₀hydroxyalkyl, and
s is from 2 to 50.

11. A process according to claim 9 wherein in the formulae I, II or III
when n is 1, W is A₂ as defined in claim 9;
when n is 2, W is -O-(Q)-O- ,-(R₁₃)N-(Q)-N(R₁₄)-, -S-(Q)-S- , -OC(O)-(Q)-C(O)O-, - OC(S)-(Q)-C(S)O- , -NC(O)-(Q)-C(O)N-, wherein
Q is as defined in claim 1,
R₁₃ and R₁₄ each independently are hydrogen, C₁-C₂₀alkyl or C₁-C₂₀hydroxyalkyl,
when n is 3, W is a trivalent residue of the formula 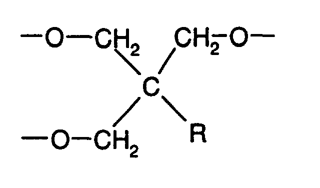 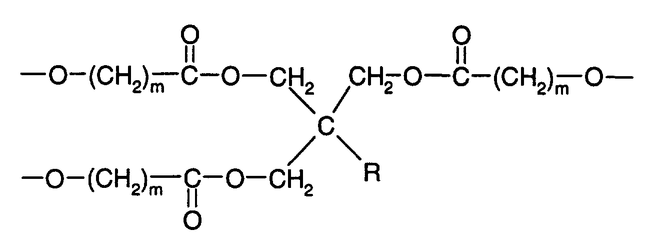 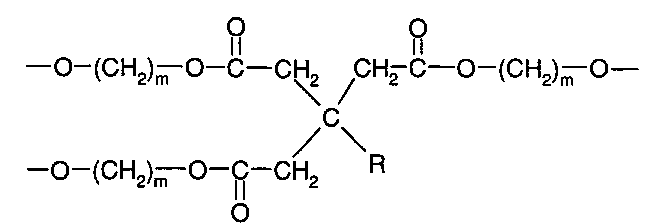 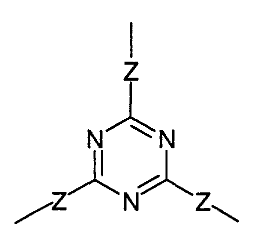 with R and Z as defined in claim 1 and m is 1 to 6
when n is 4, W is a tetravalent residue of the formula 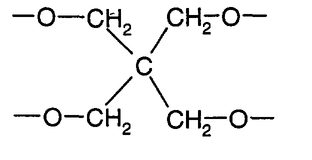 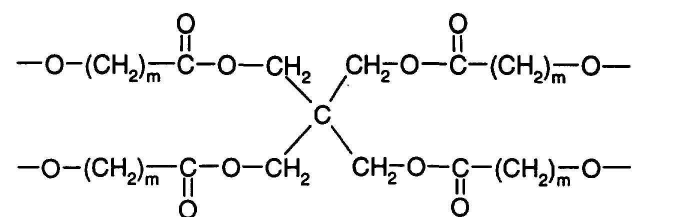 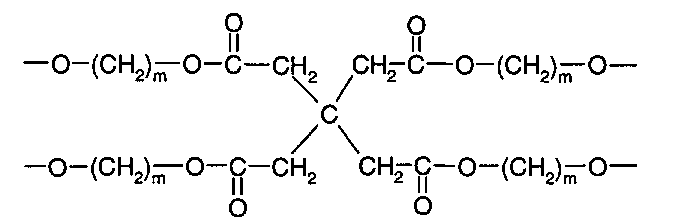 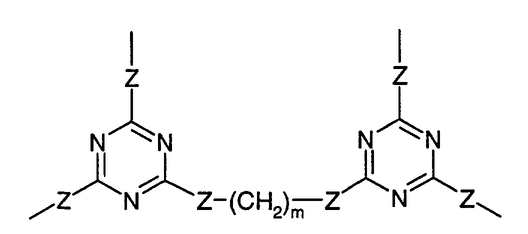 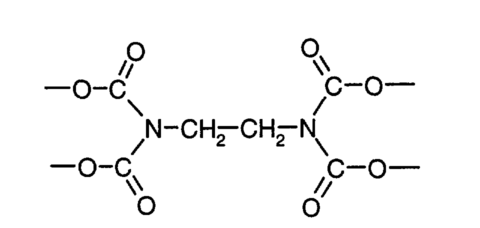 with Z as defined in claim 9 and m is 1 to 6.

12. A compound according to claim 9 wherein n is 1.

13. A compound according to claim 9, wherein
n is 1,
W is hydrogen or C₁-C₂₀alkoxy,
A₁ is a polyoxyalkylene ether residue of the formula -O-[-CH₂-CH₂-O]_{q}-CH₂-CH₂-OR₁₁, wherein q is from 4 to 30; -O-CH₂-CH₂-(CF₂)ⱼ-CF₃, wherein j is from 3 to 8; a glycerol residue or a sorbitane residue,
X is -C(O)A₁,
Z is O, and
R is hydrogen.

14. A compound of formula IV according to claim 9 wherein
s is from 5 to 10,
A₂ is hydrogen or C₁-C₂₀alkoxy,
Z₁ and Z₂ are O,
Q is -CH₂-CH₂-O-(CH₂-CH₂-O)p-CH₂-CH₂-
p is from 4 to 30,
R is hydrogen,
A₃ is OC₂H₅ and
A₄ is hydrogen.

15. A process according to claim 1 wherein the photoinitiator and the monomer or/and oligomer, containing at least one ethylenically unsaturated group and one or more hydrophilic groups in the molecule, thereby imparting anti-fogging properties, are used as a solution, emulsion or suspension in a concentration of 0.05 to 50% by weight based on the weight of the solution.

16. Use of a photoinitiator and a monomer or/and oligomer, containing at least one ethylenically unsaturated group and one or more hydrophilic groups in the molecule, thereby imparting anti-fogging properties to the molecule in a process according to claim 1.

17. A thermoplastic substrate with a strongly adherent coating having anti-fogging properties obtainable by a process according to claim 1.
